# EUROPÄISCHE PATENTSCHRIFT

(11) **EP 3 962 805 B1**
(45) Veröffentlichungstag und Bekanntmachung des Hinweises auf die Patenterteilung: **22.01.2025**
(21) Anmeldenummer: 20711054.5
(22) Anmeldetag: 27.02.2020
(51) Int. Cl.: B62M 6/20, B62M 11/06, F16H 3/091, F16H 3/10, F16H 63/18

(54) **GETRIEBEANORDNUNG, ANTRIEBSEINHEIT UND VERFAHREN ZUM BETREIBEN EINER ANTRIEBSEINHEIT FÜR EIN FAHRZEUG**
TRANSMISSION ARRANGEMENT, DRIVE UNIT AND METHOD FOR OPERATING A DRIVE UNIT FOR A VEHICLE
ENSEMBLE DE TRANSMISSION, UNITÉ D'ENTRAÎNEMENT ET PROCÉDÉ SERVANT À FAIRE FONCTIONNER UNE UNITÉ D'ENTRAÎNEMENT POUR UN VÉHICULE

(30) Priorität: 29.04.2019 DE 102019111028
(43) Veröffentlichungstag der Anmeldung: 09.03.2022
(73) Patentinhaber: Pinion GmbH, 73770 Denkendorf (DE)
(72) Erfinder: SCHMITZ, Michael, 73770 Denkendorf (DE); LERMEN, Christoph, 76137 Karlsruhe (DE); GEIGER, Linus, 73257 Köngen (DE); BÖHMLER, Friedemann, 73732 Esslingen (DE)
(74) Vertreter: Witte, Weller & Partner Patentanwälte mbB
(86) Internationale Anmeldenummer: PCT/EP2020/055188
(87) Internationale Veröffentlichungsnummer: WO 2020/221491

(56) Entgegenhaltungen:
- EP-A1- 2 338 781
- DE-A1- 102011 120 675
- DE-A1- 102014 009 833
- DE-A1- 102016 225 163

## Beschreibung

Die vorliegende Erfindung betrifft eine Getriebeanordnung für ein Fahrzeug, insbesondere für ein mit Muskelkraft antreibbares Fahrzeug wie ein Fahrrad, mit einer Eingangswelle, mit einer Vorgelegewelle, mit einer Ausgangswelle, die mit einem Antriebsrad des Fahrzeugs verbindbar ist, mit einer Mehrzahl von schaltbaren ersten Gangradsätzen, die die Eingangswelle und die Vorgelegewelle verbinden und die jeweils wenigstens einer Gangstufe zugeordnet sind und mit einem Maschinenzahnrad, das mit einer der Wellen verbunden oder verbindbar ist und in das Antriebsmoment einer elektrischen Maschine einleitbar ist.

Ferner betrifft die vorliegende Erfindung eine Antriebseinheit für ein Fahrzeug, insbesondere für ein mit Muskelkraft antreibbares Fahrzeug wie ein Fahrrad, mit einer Getriebeanordnung der oben beschriebenen Art sowie mit einer elektrischen Maschine, die an das Maschinenzahnrad der Getriebeanordnung angeschlossen ist.

Ferner betrifft die vorliegende Erfindung ein Verfahren zum Betreiben einer Antriebseinheit der oben beschriebenen Art.

Eine Getriebeanordnung gemäß dem Oberbegriff des Anspruchs 1 ist bekannt aus dem Dokument DE 10 2011 120 675 A1. Weitere Getriebeanordnungen sind bekannt aus den Dokumenten DE 10 2010 051 727 A1, DE 10 2016 225 163 A1, DE 10 2014 009 833 A1 und EP 2 388 781 A1..

Mit Muskelkraft antreibbare Fahrzeuge wie Fahrräder sind in der Regel mit Gangschaltungen ausgestattet, um eine Mehrzahl von unterschiedlichen Übersetzungsverhältnissen zwischen einer Antriebswelle, die mit Kurbeln verbunden ist, und einem Antriebsrad des Fahrzeuges einzurichten.

Derartige Gangschaltungen beinhalten Nabenschaltungen, wie sie seit jeher beispielsweise als Dreigang-Gangschaltungen bekannt sind. Die meisten Gangschaltungen sind als sog. Kettenschaltungen realisiert, bei denen eine Fahrradkette mit unterschiedlichen Kettenrädern koaxial zu einer Antriebswelle und/oder mit unterschiedlichen Zahnrädern eines Zahnkranzes im Bereich des angetriebenen Rades (Hinterrad) in Eingriff bringbar ist.

Aus dem Dokument DE 10 2008 064 514 A1 ist eine Getriebeeinheit für ein solches Fahrzeug bekannt, bei der eine Durchgangswelle, die mit Tretkurbeln zum Antreiben des Fahrzeugs verbunden ist, und eine Vorgelegewelle vorgesehen sind. An der Vorgelegewelle sind schaltbare Losräder gelagert, die mit Zahnrädern der Durchgangswelle und mit Zahnrädern einer Ausgangswelle jeweils ein Teilgetriebe bilden. Die Ausgangswelle ist koaxial zu der Durchgangswelle angeordnet. Durch eine derartige Getriebeeinheit lassen sich beispielsweise 18 unterschiedliche Gangstufen realisieren, die im Gegensatz zu Kettenschaltungen jeweils vollständig unterschiedliche Übersetzungen aufweisen und eine große Spreizung realisieren können.

Zudem ist es bekannt, Fahrräder mit Hilfsmotoren auszurüsten. In einer Variante ist dabei ein Nabenmotor im Bereich der Vorderrad- bzw. der Hinterradnabe angeordnet. Derartige Nabenmotoren werden üblicherweise in Kombination mit Kettenschaltungen angeboten. Bei Hinterradnabenmotoren ist die Kombination mit einer Nabenschaltung kompliziert, da der Motor einen großen Bauraum beansprucht. Dies führt zu einem hohen Gewicht und zu einer ungünstigen Gewichtsverteilung. Denn der Anteil der ungefederten Massen des Fahrrades nimmt zu. In Nabenmotoren werden langsam drehende Elektromotoren eingesetzt, die ein relativ hohes Drehmoment liefern. Diese sind jedoch relativ groß und weisen ein hohes Gewicht auf.

Ein weiteres Antriebskonzept bei Fahrrädern mit elektrischem Hilfsmotor besteht darin, die Hilfsmotoren als Mittelmotor im Bereich des Tretlagers zu verbauen. Hierbei wird ein von dem elektrischen Antriebsmotor bereitgestelltes Drehmoment direkt auf einen Zahnkranz übertragen, der in der Regel koaxial zu der Antriebswelle (Tretkurbel) angeordnet ist. Hierbei ist es häufig problematisch, dass die Kette in dem Tretlagerbereich nicht von einem Kettenrad auf ein anderes umgeworfen werden kann. Die Verwendung von Kettenschaltungen ist folglich eingeschränkt.

Aus dem oben genannten Dokument DE 10 2010 051 727 A1 ist eine Antriebseinheit bekannt, die ein im Bereich der Tretkurbel angeordnetes Stirnradgetriebe (wie es aus der DE 10 2008 064 514 A1 bekannt geworden ist) mit einem elektrischen Hilfsmotor verbindet.

Hierbei ist generell vorgesehen, dass die Einspeisung von Drehmoment in die Getriebeanordnung an einem axialen Ende der Getriebeanordnung erfolgt.

Das oben genannte Dokument DE 10 2011 120 675 A1 offenbart eine Drehmomenterfassungsanordnung für ein mit Muskelkraft angetriebenes Fahrzeug. Das Drehmoment wird mittelbar über einen Verdrehwinkel zwischen einer Antriebswelle und einer Eingangswelle erfasst, die mittels eines Drehfederelementes in Rotationsrichtung federnd miteinander verbunden sind.

Aus der nicht veröffentlichten deutschen Patentanmeldung mit dem Aktenzeichen DE 10 2018 101 911.4 ist eine weitere Drehmomenterfassungsanordnung für ein Fahrrad mit einem Hilfsmotor offenbart, wobei eine Drehfeder, die eine Eingangswelle und ein Drehglied federnd verbindet, innerhalb einer als Hohlwelle ausgebildeten Eingangswelle angeordnet ist.

Schließlich ist aus der nicht veröffentlichten deutschen Patentanmeldung mit dem Aktenzeichen DE 10 2018 123 575.5 ein Kurbelgetriebe offenbart, wobei eine Wandlereinheit zur Umwandlung eines Winkelversatzes zwischen einem kurbelseitigen Aufnahmebereich und einem mit einem Getrieberad verbundenen Abgabebereich in eine Änderung eines magnetischen Flusses vorgesehen ist, wobei ein magnetfeldsensitiver Sensor zur Erfassung des Winkelversatzes vorgesehen ist. Insbesondere weist die Wandlereinheit wenigstens einen Magneten und zwei gegenseitig drehbare magnetische Leitelemente auf, die innerhalb eines Luftspaltes durch ihre Form und ihre relative Winkelposition die Form des Luftspaltes winkelabhängig verändern. Der Magnet kann dabei ein konzentrisch zur Kurbelwelle angeordneter Ringmagnet sein.

Es ist vor diesem Hintergrund eine Aufgabe der vorliegenden Erfindung, eine verbesserte Getriebeanordnung, eine verbesserte Antriebseinheit sowie ein verbessertes Verfahren zum Betreiben einer Antriebseinheit anzugeben.

Die obige Aufgabe wird gelöst durch eine Getriebeanordnung mit den Merkmalen des Anspruchs 1, wobei es bevorzugt ist, wenn die ersten Gangradsätze ein erstes Teilgetriebe bilden, wobei wenigstens ein zweiter schaltbarer Gangradsatz die Vorgelegewelle und die Ausgangswelle verbindet und ein zweites Teilgetriebe bildet, wobei der wenigstens eine zweite Gangradsatz wenigstens einer Gangstufe zugeordnet ist und wobei das Maschinenzahnrad in axialer Richtung zwischen dem ersten Teilgetriebe und dem zweiten Teilgetriebe angeordnet ist.

Ferner wird die obige Aufgabe gelöst durch eine Antriebseinheit für ein Fahrzeug der oben beschriebenen Art, mit einer Getriebeanordnung der erfindungsgemäßen Art und mit einer elektrischen Maschine, die an das Maschinenzahnrad der Getriebeanordnung angeschlossen ist.

Schließlich wird die obige Aufgabe gelöst durch ein Verfahren zum Betreiben einer Antriebseinheit der erfindungsgemäßen Art, wobei ein Schaltvorgang von wenigstens einem der Radsätze mittels der Schaltvorrichtung während einer Zeitspanne durchgeführt wird, bei der ein periodisch auf eine Antriebswelle wirkendes Muskelkraft-Drehmoment minimal ist; und/oder wobei bei Erfassung eines Schaltwunsches zunächst ein von der elektrischen Maschine bereitgestelltes Drehmoment für eine erste kurze Zeitspanne erhöht wird, um zumindest die Getriebeanordnung zu verspannen, und anschließend das von der elektrischen Maschine bereitgestellte Drehmoment schnell verringert wird, um die Getriebeanordnung für eine zweite kurze Zeitspanne in einen Zustand der Lastfreiheit zu versetzen, wobei die Schaltvorrichtung zeitlich so angesteuert wird, dass ein Schalten eines Gangradsatzes in diese zweite kurze Zeitspanne fällt.

Die Getriebeanordnung ist als Stirnradgetriebeanordnung ausgebildet und ist dazu ausgelegt, eine Mehrzahl von Gangstufen einzurichten. Über ein Maschinenzahnrad, das mit einer der Wellen verbunden oder verbindbar ist, wird Antriebsmoment einer elektrischen Maschine in die Getriebeanordnung eingeleitet. Vorzugsweise hat das zweite Teilgetriebe eine Mehrzahl von zweiten schaltbaren Gangradsätzen. In diesem Fall ist die Getriebeanordnung nach der Art eines Gruppengetriebes ausgebildet. Die Anzahl der einrichtbaren Gangstufen ergibt sich durch Multiplikation der Anzahl der ersten Gangradsätze mit der Anzahl der zweiten Gangradsätze.

Die Getriebeanordnung kann insbesondere im Tretlagerbereich angeordnet werden. Die Eingangswelle ist vorzugsweise koaxial mit der Ausgangswelle. Die Eingangswelle und die Ausgangswelle sind vorzugsweise koaxial zu einer Kurbelwelle.

Durch die Anordnung des Maschinenzahnrades in axialer Richtung zwischen den zwei Teilgetrieben ist es möglich, dass das von einem Fahrer per Muskelkraft erzeugte Drehmoment über beide Teilgetriebe geführt werden kann, wohingegen das von der elektrischen Maschine bereitgestellte Antriebsmoment über das zweite Teilgetriebe geführt wird. In einer alternativen Ausführungsform ist es jedoch auch möglich, das Maschinenzahnrad so mit den Teilgetrieben zu verbinden, dass die elektrische Maschine Antriebsmoment auch über das erste Teilgetriebe und das zweite Teilgetriebe führen kann.

Bei der erfindungsgemäßen Antriebseinheit ist es bevorzugt, wenn die elektrische Maschine mit ihrer Längsachse parallel zu den Wellen der Getriebeanordnung angeordnet ist. Generell ist es jedoch auch denkbar, dass die elektrische Maschine mit ihrer Längsachse quer, insbesondere orthogonal zu den Wellen der Getriebeanordnung angeordnet ist. In diesem Fall könnte die elektrische Maschine über ein Winkelgetriebe mit der Getriebeanordnung verbunden sein, insbesondere mit dem Maschinenzahnrad. Bevorzugt ist es in jedem Fall, wenn die elektrische Maschine über eine Vorübersetzung bzw. ein Untersetzungsgetriebe mit dem Maschinenzahnrad verbunden bzw. verbindbar ist. Beispielsweise kann die Vorübersetzung eine Vorübersetzungswelle aufweisen, die zwei Festräder beinhaltet. Eines der Festräder steht mit einem Ritzel einer Rotorwelle in Eingriff. Das andere Festrad steht mit dem Maschinenzahnrad in Eingriff. Alternativ hierzu kann die Vorübersetzung einen Planetenradsatz aufweisen, der vorzugsweise parallel zu einer Rotorwelle der elektrischen Maschine angeordnet ist. Der Planetenradsatz weist vorzugsweise drei Glieder auf, von denen eines am Gehäuse festgelegt ist, um auf diese Weise eine feste hohe Vorübersetzung einrichten zu können.

Die Eingangswelle und die Ausgangswelle sind vorzugsweise jeweils als Hohlwellen ausgebildet, die um die Antriebswelle (Kurbelwelle) herum angeordnet sind. Die Eingangswelle und die Ausgangswelle sind vorzugsweise axial versetzt an der Antriebswelle angeordnet, wobei das Maschinenzahnrad vorzugsweise axial dazwischen angeordnet ist.

Die Gangradsätze des ersten und des zweiten Schaltgetriebes werden vorzugsweise mittels einer Schaltvorrichtung betätigt, die einen elektrischen Schaltmotor aufweist. Der Schaltmotor kann mit seiner Längsachse parallel zu den Wellen der Getriebeanordnung angeordnet sein, oder orthogonal hierzu. Im letzteren Fall könnte der elektrische Schaltmotor über ein Schneckengetriebe an ein Hohlrad einer Schaltvorrichtung angeschlossen werden. Die Schaltvorrichtung beinhaltet ferner vorzugsweise eine Nockenwelle, die innerhalb der als Hohlwelle ausgebildeten Vorgelegewelle angeordnet ist. Die Nockenwelle dreht sich im Betrieb mit der Vorgelegewelle mit. Die Vorgelegewelle und die Nockenwelle sind vorzugsweise über ein Drehzahlüberlagerungsgetriebe miteinander verbunden, das vorzugsweise zwei gekoppelte Planetenradsätze beinhaltet. Die Kopplung ist derart gelöst, dass die Sonnenräder dieser zwei Planetenradsätze generell mit gleicher Geschwindigkeit drehen. Lediglich dann, wenn auf ein Glied des einen Planetenradsatzes (beispielsweise ein Hohlrad des einen Planetenradsatzes) eine Drehbewegung eingeleitet wird, erfolgt eine Relativverdrehung zwischen der Nockenwelle und der Vorgelegewelle, wodurch eine Quellgangstufe ausgelegt werden kann und eine Zielgangstufe eingelegt werden kann.

Die Schaltvorrichtung verfügt vorzugsweise über ein ein- oder mehrstufiges Reduktionsgetriebe (Planet, Stirnrad, Schnecke oder dergleichen), um das Drehmoment zu erhöhen bzw. um den Schaltmotor kleiner ausführen zu können.

Die Kombination eines Schaltgetriebes mit mehreren Gangstufen, einem elektrischen Antriebsmotor und einer Schaltvorrichtung mit einem elektrischen Schaltmotor ist besonders vorteilhaft. Denn hierbei ist es möglich, Schaltvorgänge so durchzuführen, dass diese mit einem von der elektrischen Antriebsmaschine bereitgestellten Drehmoment abgestimmt, insbesondere synchronisiert werden. Dies kommt insbesondere bei dem oben beschriebenen erfindungsgemäßen Verfahren zum Betreiben einer Antriebseinheit zum Ausdruck. Der Fahrer kann zwar nach wie vor einen Schaltvorgang einleiten, und zwar vorzugsweise über einen an einem Lenker vorgesehenen Schalter bzw. Schaltauslöser. Dessen Betätigung wird jedoch von einer Steuereinrichtung erfasst und auf dessen Grundlage wird dann, koordiniert mit der Abgabe von Drehmoment durch den elektrischen Antriebsmotor, ein Aktuator, insbesondere in Form des oben erwähnten elektrischen Schaltmotors, angesteuert, um den Schaltvorgang effizient durchführen zu können.

Vorzugsweise ist eine Sensoreinheit vorgesehen, um ein von dem Fahrer eingeleitetes Drehmoment zu erfassen, sowie die vom Fahrer erzeugte Drehzahl, und optional eine Position der Kurbelstellung.

Anstelle einer Sensorik zum Erfassen einer Kurbelstellung ist es auch denkbar, die Antriebswelle so auszugestalten, dass die Kurbeln nur in einer bestimmten Drehposition relativ hierzu daran festgelegt werden können. In diesem Fall kann die Kurbelstellung aus der Drehposition der Antriebswelle abgeleitet werden. Vorzugsweise weisen die Kurbeln und eine Antriebswelle eine über den Umfang ungleichmäßige Form auf. Wenn die Kurbeln mit der Antriebswelle über eine Verzahnung verbunden werden, so kann diese bspw. eine ungleiche Teilung aufweisen oder einen einzelnen besonderen, anders geformten Zahn.

Die Schaltvorrichtung verfügt ferner vorzugsweise über einen Positions-/Drehzahlsensor zur Steuerung bzw. Regelung von Schaltvorgängen. Ferner beinhaltet die Schaltvorrichtung vorzugsweise ein ein- oder mehrstufiges Reduktions- bzw. Drehzahlanpassungsgetriebe zur Drehzahlreduktion des Schaltaktuators (Schaltmotors).

Eine Steuerungs- und Leistungselektronik, mittels der die elektrische Antriebsmaschine und der Schaltmotor angesteuert werden können, sind vorzugsweise Bestandteil der Antriebseinheit und sind vorzugsweise innerhalb eines Gehäuses der Antriebseinheit aufgenommen.

Die Antriebseinheit verfügt vorzugsweise über Anschlüsse für sonstige periphere Komponenten, wie beispielsweise eine Batterie, eine Bedienpersonschnittstelle (human interface), einen Schalter bzw. Schaltgeber ("shifter"), einen Raddrehzahlsensor zur Erfassung einer Drehzahl eines angetriebenen Rades des Fahrzeuges, sowie vorzugsweise über universelle Schnittstellen (CAN-Bus), etc., um von außen auf die Elektronik zugreifen zu können, beispielsweise zu Diagnose-, Wartungs- oder Software-Update-Zwecken.

Durch die oben erwähnte Möglichkeit einer koordinierten Durchführung eines Schaltvorganges mittels eines Schaltaktuators und der Bereitstellung von Drehmoment mittels des elektrischen Antriebsmotors ist es möglich, ein Schalten unter voller Last zu realisieren.

Die oben beschriebene Nockenwelle kann in einer bevorzugten Ausführungsform auch dazu verwendet werden, um einen ansteuerbaren Freilauf anzusteuern. Für diesen Fall lässt sich die elektrische Maschine für bestimmte Situationen vom Antriebsstrang trennen, beispielsweise um ein Klickgeräusch zu vermeiden.

Die Nockenwelle kann mehrteilig ausgeführt sein, z.B. ein Nockenwellenabschnitt für jedes Teilgetriebe sowie ein Nockenwellenabschnitt für die Steuerung einer der elektrischen Maschine zugeordneten Schaltklinke. Die Nockenwellenabschnitte können permanent verbunden sein, können zueinander axial verschieblich sein oder können nur über eine Teilumdrehung verdrehfest miteinander verbunden sein. Die Nockenwelle eines oder beider Teilgetriebe kann auch eine Geometrie aufweisen, die so gestaltet ist, dass in einer Drehstellung in einem oder beiden Teilgetrieben alle Freiläufe deaktiviert sind, also kein Gang eingelegt ist. Dadurch kann in Verbindung mit der Steuerung und einer entsprechenden Diebstahlschutzeinrichtung (PIN-Code, Schlüssel) ein Diebstahlschutz realisiert werden, bei dem die Antriebseinheit sich für Fahrer und/oder elektrische Maschine im Leerlauf befindet.

Die Getriebeanordnung der Antriebseinheit läuft vorzugsweise in einem Fluidbad, insbesondere einem Ölbad. Zwischen einem Getrieberaum und Elektromotoren bzw. einer Elektronik wird vorzugsweise eine Abdichtung gegenüber Fluid verwendet.

Das Fluid kann als Wärmetransportmedium genutzt werden, um Wärmeenergie aus Bereichen mit großem Wärmeeintrag in Bereiche mit großer Wärmekapazität (z.B. Zahnräder und Gehäuse) zu transportieren.

In einer bevorzugten Ausführungsform kann das Fluid auch aktiv zu Stellen großen Wärmeeintrags transportiert werden. Dies kann beispielsweise durch eine Anspritzung von warmen Bereichen mit Fluid durch die laufenden Zahnräder erfolgen (nach der Art einer Tauchschmierung). Ferner ist es auch denkbar, Fluid mittels einer Fluidpumpe durch Kühlkanäle zu Strukturen zu pumpen, die thermisch mit einer Wärmequelle (z.B. Elektronik oder Statorwicklungsköpfe) gekoppelt ist. Hierbei können separate Kühlkörper vorgesehen sein, Wärmetauscher oder dergleichen.

Das Fluidsystem zur Wärmeverteilung und -ableitung kann auch ein separates Fluidvolumen aufweisen, welches nicht mit dem Ölvolumen zur Schmierung verbunden ist. Dazu wäre dann ein separates Vorratsvolumen oder ein vollständig geschlossener Kreislauf notwendig.

Die elektrische Maschine der Antriebseinheit ist vorzugsweise ein bürstenloser Gleichstrommotor (BLDC). Über eine Leistungselektronik wird die elektrische Maschine angesteuert. Ein Rotorlagegeber (Magnet und Sensor) ist vorzugsweise zentral auf der Rotorwelle der elektrischen Maschine positioniert. Die elektrische Maschine treibt vorzugsweise ein mehrstufiges Reduktionsgetriebe an, das in unterschiedlichen Positionen und auf unterschiedliche Art und Weise in den Kraftfluss der Antriebseinheit eingebunden werden kann.

Die elektrische Maschine ist vorzugsweise über eine Kupplung oder einen Freilauf mechanisch an die Getriebeanordnung angebunden, insbesondere um ein Mitschleppen des Elektromotors bei Fahrten über einer Geschwindigkeitswelle (z.B. 25 km/h) oder bei Fahrten ohne Unterstützung zu vermeiden.

Bei Fahrten über 25 km/h oder auch in jeder anderen Situation, bei der an der Vorgelegewelle eine Drehzahl anliegt, an der elektrische Maschine jedoch nicht, kann es sinnvoll sein, wenn die elektrische Maschine mit minimalem Drehmoment "mitbetrieben" wird, damit ein Kraftschluss eines Freilaufs der elektrischen Maschine erhalten bleibt. So kann eine Impulsbelastung (Eingriffsstoß) vermieden werden, sobald die elektrische Maschine wieder zugeschaltet wird.

Die Aufgabe wird somit vollkommen gelöst.

Von besonderem Vorzug ist es, wie oben erwähnt, wenn das Maschinenzahnrad über einen Freilauf mit einer der Wellen verbunden ist, insbesondere mit der Vorgelegewelle.

Der Freilauf kann insbesondere ein schaltbarer Freilauf sein, der aktivierbar ist und deaktivierbar ist. Der Freilauf ist vorzugsweise koaxial zu der einen Welle angeordnet.

Durch Deaktivierung des schaltbaren Freilaufes kann die elektrische Maschine von der Getriebeeinheit vollständig entkoppelt werden. Wenn der schaltbare Freilauf aktiviert ist, kann ein in Antriebsrichtung wirkendes Antriebsmoment der elektrischen Maschine auf die entsprechende Welle der Getriebeanordnung übertragen werden, beispielsweise auf die Vorgelegewelle. Sofern die entsprechende Welle schneller dreht als das Maschinenzahnrad, wird das Maschinenzahnrad "überholt", wodurch typischerweise ein Freilaufklicken auftritt.

Gemäß einer weiteren bevorzugten Ausführungsform ist das Maschinenzahnrad fest mit der Vorgelegewelle verbunden, wobei die elektrische Maschine über eine Trennkupplung oder einen Freilauf, insbesondere einen schaltbaren Freilauf, mit dem Maschinenzahnrad verbindbar ist (z.B. eine elektromechanische Reib- oder Formschlusskupplung).

Während bei der Verbindung des Maschinenzahnrades mit einer der Wellen über einen Freilauf dieser Freilauf generell koaxial zu der entsprechenden Welle angeordnet ist, ist bei der weiteren Variante, bei der die elektrische Maschine über eine Trennkupplung oder einen Freilauf mit dem Maschinenzahnrad verbindbar ist, diese Trennkupplung oder dieser Freilauf vorzugsweise nicht koaxial zu einer der Wellen der Getriebeanordnung angeordnet. Die Trennkupplung kann insbesondere achsparallel vorgesehen sein, insbesondere an einer Maschinen-/Rotorwelle. Vorzugsweise ist die Trennkupplung vor einer Vorübersetzung angeordnet.

Die Trennkupplung kann beispielsweise eine Klauenkupplung sein, die vorzugsweise mittels eines Aktuators wie eines elektrischen Schaltaktuators betätigbar ist. Die Trennkupplung kann eine normalerweise geschlossene Kupplung sein, die im Bedarfsfall betätigt wird, um die Kupplung zu öffnen. Alternativ kann die Trennkupplung jedoch auch eine normalerweise geschlossene Kupplung sein, oder eine bistabile Kupplung.

Gemäß einer weiteren bevorzugten Ausführungsform ist das Maschinenzahnrad über einen Freilauf mit einer Zwischenwelle verbunden, die fest mit einem an der Vorgelegewelle drehbar gelagerten Losrad von einem Gangradsatz der ersten Gangradsätze verbunden ist.

Der Freilauf, über den das Maschinenzahnrad mit der Zwischenwelle verbunden ist, ist dabei vorzugsweise ein nicht schaltbarer Freilauf, ist also vorzugsweise nicht mittels der Nockenwelle betätigbar.

Hierdurch kann ein Drehmoment der elektrischen Maschine über den einen Gangradsatz in das erste Teilgetriebe eingeleitet werden, wobei einer der Gangradsätze vorzugsweise geschaltet ist, um Muskelkraft-Drehmoment auf die Vorgelegewelle zu übertragen.

Da der Freilauf, über den das Maschinenzahnrad mit der Zwischenwelle verbunden ist, vorzugsweise nicht schaltbar ist, ist es aus Sicherheitsgründen bevorzugt, wenn die Eingangswelle über einen weiteren, vorzugsweise nicht schaltbaren, Freilauf mit einer Festradwelle verbunden ist, an der Festräder der ersten Gangradsätze festgelegt sind.

Hierdurch kann vermieden werden, dass Antriebsenergie der elektrischen Maschine in bestimmten Situationen in die Kurbelwelle (Antriebswelle) eingeleitet wird, was bei einem Fahrer zu Komforteinbußen führen kann. Ferner kann die Sicherheit verbessert werden, denn die Kurbel kann nicht ohne den Willen des Fahrers von der elektrischen Maschine gedreht werden.

Gemäß einer weiteren bevorzugten Ausführungsform ist das Maschinenzahnrad mit einer Zwischenwelle verbunden oder verbindbar, die koaxial zu der Eingangswelle angeordnet ist.

In einer Variante ist die Zwischenwelle eine Festradwelle, an der die Festräder des ersten Teilgetriebes festgelegt sind. In diesem Fall ist es bevorzugt, wenn die elektrische Maschine über wenigstens einen nicht schaltbaren Freilauf mit dem Maschinenzahnrad verbunden ist. Der nicht schaltbare Freilauf kann beispielsweise innerhalb der Vorübersetzung integriert sein, beispielsweise an einer Vorübersetzungswelle hiervon.

Bei dieser Variante ist es bevorzugt, wenn das Maschinenzahnrad als Losrad koaxial zu der Vorgelegewelle angeordnet ist und wenn zwischen dem Maschinenzahnrad und der Vorgelegewelle keine Koppelmöglichkeit besteht.

Ferner ist es generell bevorzugt, wenn die Zwischenwelle über einen weiteren nicht schaltbaren Freilauf mit der Eingangswelle verbunden ist, und zwar, wie oben, aus Komfort- und/oder Sicherheitsgründen.

In einer alternativen Ausführungsform ist das Maschinenzahnrad drehbar an der Zwischenwelle gelagert und ist mit der Zwischenwelle über einen nicht schaltbaren Freilauf verbunden. In diesem Fall ist es ferner bevorzugt, wenn die Zwischenwelle gleichzeitig die Festradwelle ist, an der die Festräder des ersten Teilgetriebes festgelegt sind. Die Festradwelle ist koaxial um die Antriebswelle und/oder Eingangswelle herum angeordnet. Die Festradwelle ist über einen weiteren nicht schaltbaren Freilauf mit der Eingangswelle gekoppelt. Der weitere Freilauf dient wiederum Komfort- oder Sicherheitsgründen. Bei dieser bevorzugten Variante sind sowohl der eine Freilauf als auch der weitere Freilauf koaxial zu der Eingangswelle angeordnet.

Bei dieser Variante ist es ferner bevorzugt, wenn das Maschinenzahnrad mit einem Zahnrad in Eingriff steht, das an einer Nebenwelle festgelegt ist, die achsparallel versetzt ist zu der Eingangswelle und zu der Vorgelegewelle. Das Zahnrad der Nebenwelle ist in diesem Fall Teil einer Vorübersetzung (siehe unten).

Ferner ist es generell denkbar, dass in dem Leistungsübertragungspfad von der elektrischen Maschine zu dem Maschinenzahnrad eine schaltbare Trennkupplung vorgesehen ist. In diesem Fall ist es möglich, weder den einen Freilauf vorzusehen, noch den zweiten Freilauf, der aus Komfort- oder Sicherheitsgründen vorgesehen ist.

Gemäß der Erfindung ist die elektrische Maschine über eine Vorübersetzung mit dem Maschinenzahnrad verbunden, wobei die Vorübersetzung axial überlappend mit wenigstens einem Gangradsatz der ersten Gangradsätze und/oder axial überlappend mit wenigstens einem Gangradsatz der zweiten schaltbaren Gangradsätze angeordnet ist.

Auf diese Weise kann eine vergleichsweise kompakt bauende elektrische Maschine verwendet werden. Ferner kann die Getriebeanordnung axial kurz realisiert werden. Von besonderem Vorzug ist es, wenn die Vorübersetzung axial überlappend mit Gangradsätzen der zweiten schaltbaren Gangradsätze angeordnet ist. Ferner ist es in diesem Fall bevorzugt, wenn die elektrische Maschine axial überlappend mit Gangradsätzen der ersten schaltbaren Gangradsätze angeordnet ist.

Unter einer axialen Überlappung kann verstanden werden, dass ein oder alle Zahnräder der Vorübersetzung sich zumindest mit einem Teil ihres Umfangs im Bereich eines Umfanges von einem oder mehreren Zahnrädern der ersten und/oder zweiten Gangradsätze befinden.

Ferner ist es insgesamt vorteilhaft, wenn die elektrische Maschine über eine Vorübersetzung mit dem Maschinenzahnrad verbunden ist, wobei die Vorübersetzung vorzugsweise ein Zwischenrad aufweist, das drehbar an einer zu der Eingangswelle und der Vorgelegewelle parallel versetzt angeordneten Nebenwelle gelagert ist.

Durch die Vorübersetzung ist es möglich, eine elektrische Maschine als Antriebsquelle zu verwenden, die mit hohen Drehzahlen betrieben wird und folglich kompakt bauen kann. Über die Vorübersetzung kann die relativ hohe Drehzahl der elektrischen Maschine dann in eine für die Anbindung an die Getriebeanordnung geeignete Drehzahl umgesetzt werden.

Wenn die Vorübersetzung ein Zwischenrad aufweist, das drehbar an einer zu der Eingangswelle und der Vorgelegewelle parallel versetzt angeordneten Vorübersetzungswelle gelagert ist, kann eine relativ große Übersetzung für die Vorübersetzung eingerichtet werden. In diesem Fall ist es bevorzugt, wenn das Zwischenrad zum einen mit einem Zahnrad der Vorübersetzung in Eingriff steht, und zum anderen mit einem Zahnrad, das koaxial zu der Eingangswelle drehbar gelagert ist.

Gemäß einer weiteren vorteilhaften Ausführungsform ist die Eingangswelle über eine Federanordnung einer Drehmomenterfassungseinrichtung mit einer Antriebswelle gekoppelt.

Die Eingangswelle und die Antriebswelle sind vorzugsweise begrenzt zueinander verdrehbar. Die Eingangswelle ist vorzugsweise als Hohlwelle um die Antriebswelle herum angeordnet. Die Federanordnung ist vorzugsweise durch eine Torsionsfeder, insbesondere in Form einer Drehstabfeder gebildet. Die Auslenkung der Federanordnung, also beispielsweise die Verdrehung der Drehstabfeder, kann auf geeignete Art und Weise erfasst werden. Diese Auslenkung ist vorzugsweise proportional zu einem auf die Antriebswelle wirkenden Drehmoment, das von einem Fahrer des Fahrzeugs aufgebracht wird. In Abhängigkeit hiervon kann die elektrische Maschine dann angesteuert werden, um bedarfsweise elektrisches Antriebsmoment bereitzustellen.

Die Antriebswelle weist an ihren Enden Axialverzahnungen zum Befestigen von Kurbeln auf. Die Axialverzahnungen können vorzugsweise so ausgeführt sein, dass ein Aufstecken in nur einer oder in zwei um 180° versetzten Drehpositionen möglich ist.

Generell ist es bevorzugt, wenn die Getriebeanordnung geschmiert ist, insbesondere mittels eines Öls.

Gemäß einer weiteren bevorzugten Ausführungsform sind die Radsätze der Getriebeanordnung in einem Gehäuse angeordnet, das einen Fluidsumpf zur Einrichtung einer Schmierung für die Radsätze definiert, wobei in dem Gehäuse eine Wärmequelle angeordnet ist und wobei die Anordnung der Wärmequelle in dem Gehäuse so gewählt und/oder das Gehäuse so ausgebildet ist, dass die Wärmequelle von Fluid angeströmt wird, das im Betrieb aus dem Fluidsumpf entnommen wird, insbesondere im Wege einer Tauschschmierung hochgeschleudert wird.

Hierdurch ist es möglich, die Wärmequelle effizient durch das Fluid zu kühlen. Zur Kühlung des Fluides kann ein Fluidkühler in das Gehäuse integriert sein.

Gemäß einer weiteren bevorzugten Ausführungsform sind die Radsätze der Getriebeanordnung in einem Gehäuse angeordnet, in dem ein Fluidsumpf zur Schmierung und/oder Kühlung angeordnet ist, wobei eine Fluidpumpe Fluid aus dem Fluidsumpf ansaugt, das zur Kühlung einer Wärmequelle wie beispielsweise einer Leistungselektronik oder Statorwicklungen, insbesondere Statorwickelköpfen verwendet wird.

Das von der Fluidpumpe angesaugte Fluid kann beispielsweise in einen Kühlkanalkreislauf eingespeist werden, der in das Gehäuse integriert ist und über den die Wärmequelle gekühlt wird. Die Wärmequelle ist hierbei vorzugsweise thermisch mit dem Kühlkanal gekoppelt. Das von der Fluidpumpe angesaugte Fluid kann ferner zu einer Einspritzschmierung genutzt werden, um Fluid auf einen Eingriffsbereich von Zahnrädern der Radsätze zu leiten. Ferner kann das angesaugte Fluid auch im Wege einer Einspritzschmierung auf eine Wärmequelle oder einen damit verbundenen Kühlkörper gerichtet werden, der in dem Gehäuse aufgenommen ist.

Generell ist es vorteilhaft, wenn die Wärme der Wärmequelle auf einen Wärmespeicherkörper übertragen wird, bei dem es sich bspw. um den Zahnradsatz handeln kann. Die Übertragung kann dabei mittelbar über das Fluid erfolgen. Der Zahnradsatz ist vergleichsweise groß und schwer und besitzt folglich eine relativ große Wärmekapazität.

Generell ist es ferner sinnvoll, vor allem die Leistungstransistoren einer Leistungselektronik über geeignete Kühlelemente und die Durchströmung von Kühlfluid zu kühlen. Die Leistungselektronik kann eine Leistungselektronik der elektrischen Maschine sein und/oder eine Leistungselektronik eines Schaltmotors.

Vorzugsweise weist die elektrische Maschine einen Stator auf, der mittels einer Kühlanordnung gekühlt ist. Die Kühlung kann dadurch erfolgen, dass Fluid gegen eine Gehäusewand geführt wird, hinter der die Statorwicklungen angeordnet sind. Ferner kann das Gehäuse einen Kühlkanal aufweisen, im Bereich der Statorwicklungen verlegt ist, um die Statorwicklungen auf diese Weise durch Kühlfluid zu kühlen, das bspw. mittels einer Fluidpumpe zugeführt wird. Von besonderem Vorzug ist es, wenn die Kühlung insbesondere im Bereich von Statorwickelköpfen der Statorwicklungen erfolgt.

Bei der erfindungsgemäßen Antriebseinheit ist es bevorzugt, wenn eine Steuereinrichtung zum Ansteuern einer Schaltvorrichtung für die Gangradsätze und/oder zum Ansteuern der elektrischen Maschine vorgesehen ist, und wenn eine Sensoranordnung zum Erfassen wenigstens einer Zustandsgröße der Antriebseinheit vorgesehen ist.

Die Steuereinrichtung ist vorzugsweise auf einer Leiterplatte integriert, die in dem Gehäuse der Antriebseinheit integriert ist. Die Leiterplatte ist vorzugsweise in einem gegenüber einem Fluidsumpf abgedichteten Bereich des Gehäuses aufgenommen. Auch die elektrische Maschine kann in einem solchen abgedichteten Bereich des Gehäuses aufgenommen sein. Die Leiterplatte ist vorzugsweise thermisch an das Gehäuse angebunden.

Von besonderem Vorzug ist es dabei, wenn die Sensoranordnung einen Rotorlagesensor zur Erfassung einer Drehlage eines Rotors der elektrischen Maschine und/oder einen Schaltlagesensor und/oder einen Drehzahlsensor zur Erfassung einer Drehzahl der Eingangswelle und/oder einen Drehpositionssensor zur Erfassung einer relativen Drehposition der Eingangswelle und/oder einen Kurbellagesensor zur Erfassung einer Drehposition von mit einer Antriebswelle verbundenen Kurbeln und/oder einen Drehmomentsensor zur Erfassung eines in eine Antriebswelle eingeleiteten Muskelkraft-Drehmomentes aufweist.

Die Lagesensoren, die Positionssensoren und die Drehzahlsensoren können jeweils gebildet sein durch Inkrementalgeber. Eine absolute Drehposition kann ggf. über eine Indexmarke einer Teilung eines solchen inkrementelles Drehgebers detektiert werden. Der Inkrementalgeber kann bspw. dadurch realisiert werden, dass die einzelnen Inkremente durch Zähne eines Zahnrades gebildet werden, wobei den Zähnen ein gehäusefester Sensor zugeordnet ist. Durch eine Referenz-/Indexmarke (z.B. durch Weglassen eines Zahnes oder durch eine nur hälftige Ausführung des Zahnes) kann dann ggf. auch die absolute Drehposition erfasst werden, z.B. eine Drehposition einer Eingangswelle und somit von Kurbeln.

Ein Lagesensor kann dazu in der Lage sein, einen Drehwinkel oder eine Verschiebelage zu erfassen. Ein Sensor zur Erfassung der absoluten Drehlage der Antriebswelle kann zusammen mit Information über die Drehlage von Kurbeln in Relation zu der Antriebswelle dazu verwendet werden, um die absolute Lage der Kurbeln zu erfassen, die die Antriebswelle antreibt. Die absolute Lage der Kurbel kann vorzugsweise dazu verwendet werden, festzustellen, wann ein periodisch auf eine Antriebswelle wirkendes Muskelkraft-Drehmoment minimal oder maximal ist. Das Muskelkraft-Drehmoment ist in der Regel dann minimal, wenn die Kurbeln vertikal stehen. Das maximale Muskelkraft-Drehmoment wird in der Regel daran aufgebracht, wenn die Kurbeln horizontal stehen.

Gemäß einer weiteren bevorzugten Ausführungsform der Antriebseinheit ist eine Leiterplatte an einem Gehäuse festgelegt, wobei an der Leiterplatte die Steuereinrichtung und/oder wenigstens ein Sensor der Sensoranordnung angeordnet ist, wobei die Steuereinrichtung vorzugsweise eine Leistungselektronik für die elektrische Maschine und/oder eine Leistungselektronik für einen Schaltmotor und/oder wenigstens einen Mikroprozessor zur Durchführung eines Betriebsprogrammes gemäß dem erfindungsgemäßen Verfahren aufweist.

Von besonderem Vorzug ist es, wenn der Rotorlagesensor zur Erfassung einer Drehlage eines Rotors der elektrischen Maschine und der Schaltlagesensor zum Erfassen einer Position einer Schaltvorrichtung auf einer solchen gemeinsamen Leiterplatte angeordnet sind.

Die Leiterplatte ist vorzugsweise an einem axialen Ende des Gehäuses angeordnet, vorzugsweise in einer Ausrichtung quer zu den Achsen der Wellen der Getriebeanordnung.

Ferner ist es vorteilhaft, wenn die Steuereinrichtung dazu ausgebildet und eingerichtet ist, einen Schaltvorgang von wenigstens einem der Radsätze mittels der Schaltvorrichtung während einer Zeitspanne durchzuführen, innerhalb der ein periodisch auf eine Antriebswelle wirkendes Muskelkraft-Drehmoment minimal ist.

Die Erfassung, wann ein periodisch auf eine Antriebswelle wirkendes Muskelkraft-Drehmoment minimal ist, kann durch Erfassen einer absoluten Drehposition von Kurbeln und/oder einer Antriebswelle/Kurbelwelle der Getriebeanordnung ermittelt werden. In der Regel ist das Drehmoment minimal, wenn die Kurbeln vertikal stehen. Hierbei kann der Schaltvorgang schonend für die Getriebeanordnung durchgeführt werden, und ggf. sogar unter Last.

Gemäß einer weiteren bevorzugten Ausführungsform ist die Steuereinrichtung dazu ausgebildet und eingerichtet, bei Erfassung eines Schaltwunsches zunächst ein von der elektrischen Maschine bereitgestelltes Drehmoment für eine erste kurze Zeitspanne zu erhöhen, um zumindest die Getriebeanordnung zu verspannen, und anschließend das von der elektrischen Maschine bereitgestellte Drehmoment schnell zu verringern, um die Getriebeanordnung für eine zweite kurze Zeitspanne in einen Zustand der Lastfreiheit zu versetzen, wobei die Schaltvorrichtung zeitlich so angesteuert wird, dass ein Schalten eines Gangradsatzes in diese zweite kurze Zeitspanne fällt.

Die erste kurze Zeitspanne ist so kurz, dass das Fahrzeug nicht merklich beschleunigt wird. Vorzugsweise ist die erste kurze Zeitspanne kürzer als eine halbe Periode der Antriebsfrequenz, mit der die Antriebswelle kurbelnd angetrieben wird. Bei dem Erhöhen des Drehmomentes wird vorzugsweise der gesamte Antriebsstrang verspannt. Die darin gespeicherte Energie wird beim schnellen bzw. schlagartigen Verringern des Drehmomentes der elektrischen Maschine freigegeben, so dass die Getriebeanordnung in den Zustand der Lastfreiheit versetzt wird. Die zweite kurze Zeitspanne ist vorzugsweise kürzer als die erste kurze Zeitspanne.

Unter einem schnellen Verringern des Drehmomentes wird vorzugsweise verstanden, dass das Drehmoment innerhalb einer Zeitspanne verringert wird, die kürzer ist als die erste und die zweite kurze Zeitspanne. Das Erhöhen des Drehmomentes erfolgt vorzugsweise auf ein Drehmoment, das 70 % bis 200 % des maximalen Drehmomentes der elektrischen Maschine beträgt. Beim Verringern des Drehmomentes wird die elektrische Maschine auf einen Wert von 5 % bis 25 % des maximalen Antriebsmomentes verringert. Beim Verringern des Drehmomentes wird die elektrische Maschine nicht vollständig abgeschaltet bzw. stromlos geschaltet, um durch Eigen- bzw. Gegeninduktion auftretende nachteilige Effekte zu vermeiden.

Gemäß einer weiteren bevorzugten Ausführungsform ist die Steuereinrichtung dazu ausgebildet und eingerichtet, dass sich die erste kurze Zeitspanne zeitlich mit einer Zeitspanne überschneidet, bei der ein periodisch auf eine Antriebswelle wirkendes Muskelkraft-Drehmoment maximal ist, und/oder die Steuereinrichtung ist vorzugsweise dazu ausgebildet und eingerichtet, dass die zweite kurze Zeitspanne jener Zeitspanne entspricht, innerhalb der das periodisch auf die Antriebswelle wirkende Muskelkraft-Drehmoment minimal ist.

Jedenfalls ist es vorteilhaft, wenn der Schaltvorgang in diese zweite kurze Zeitspanne fällt, die vorzugsweise innerhalb einer Zeitspanne liegt, innerhalb der das Muskelkraft-Drehmoment minimiert ist.

Wie oben erwähnt, ist es bevorzugt, wenn die elektrische Maschine über eine Trennkupplung oder über einen schaltbaren Freilauf von der Getriebeanordnung abgekoppelt werden kann.

Demgemäß ist es vorteilhaft, wenn die elektrische Maschine über eine solche Trennkupplung oder einen schaltbaren Freilauf mit einer der Wellen verbindbar ist, wobei die Trennkupplung bzw. der Freilauf bedarfsweise betätigt wird, so dass (a) eine schlagartige Deaktivierung eines von der elektrischen Maschine bereitgestellten Drehmomentes möglich ist, und/oder (b) eine Deaktivierung erfolgt, wenn eine Steuereinrichtung kein Autorisierungssignal erhält, und/oder (c) bei abgeschalteter elektrischer Maschine kein Klickgeräusch zu hören ist.

Die Maßnahme (a) kann ggf. aus Sicherheitsgründen erfolgen. Die Maßnahme (b) kann dazu dienen, die Antriebseinheit nur dann zu aktivieren, wenn die Steuereinrichtung mit einem gültigen Autorisierungssignal versorgt wird, das beispielsweise durch eine Autorisierungseinrichtung ausgelöst werden kann. Folglich kann hierdurch der Diebstahlschutz erhöht werden. Die Autorisierungseinrichtung kann bspw. einen PIN-Code und/oder einen Schlüssel beinhalten. Ferner kann durch die Maßnahme (c) der Komfort der Antriebseinheit erhöht werden.

Die erfindungsgemäßen Verfahren nutzen die verschiedenen Komponenten der Antriebseinheit und deren gemeinsame Steuerung über eine zentrale Elektronik, um die Funktionalität des Gesamtsystems wesentlich zu erweitern. So gibt es mehrere Möglichkeiten, vor allem ein Schalten unter Last zu realisieren. In diesem Fall muss der Fahrer keine bewusste Tretkraftunterbrechung für den Gangwechsel erzeugen. Grundsätzlich sollte dabei, nachdem der Fahrer einen Gangwechsel initiiert hat, abgewartet werden, bis das typischerweise sinusähnliche Antriebsmoment, das von dem Fahrer bereitgestellt wird, ein Minimum erreicht. Vorteilhaft ist es, wenn der Zeitpunkt dieses Minimums antizipiert wird. Durch Sensordaten (Drehzahl, Drehmoment etc.) und eine entsprechende Auswertung bzw. Prognose kann dieser Zeitpunkt errechnet werden.

Der Schaltmotor beginnt vorzugsweise den Schaltvorgang bereits kurze Zeit vor dem zu erwartenden Minimum. Diese Vorgehensweise kann ausreichen, wenn ein Schaltvorgang nur in dem ersten Teilgetriebe erfolgt, und die elektrische Maschine zwischen dem ersten Teilgetriebe und dem zweiten Teilgetriebe angebunden ist. Wenn auch ein Schaltvorgang in dem zweiten Teilgetriebe erfolgt, über das die elektrische Maschine Drehmoment überträgt, dann wird vorzugsweise folgendes Verfahren durchgeführt. Kurz bevor der Fahrer das Antriebsdrehmomentminimum erreicht und der Schaltmotor betätigt wird, wird das Antriebsmoment von der elektrischen Maschine reduziert. Hierdurch liegt im Moment des Schaltens an dem betroffenen Teilgetriebe neben dem Fahrer-Drehmoment nicht auch noch das Unterstützungsmoment der elektrischen Maschine an.

Eine besondere Möglichkeit zur Verbesserung des Schaltverhaltens unter Last ergibt sich durch die Strategie, bei der die Getriebeanordnung bzw. der Antriebsstrang kurzzeitig verspannt wird und anschließend entspannt wird, um einen Zustand der Lastfreiheit zu erreichen. In diesem Zustand wird dann der Schaltmotor betätigt und der Gang gewechselt (Auslegen einer Quellgangstufe und Einlegen einer Zielgangstufe).

Es kann dabei vorteilhaft sein, den Schaltmotor bereits vorher zu betätigen, um den Schaltmotor zunächst zu beschleunigen. Ziel ist es in jedem Fall, dass der Schaltmotor betätigt ist, sobald Fahrer- und elektrisches Maschinendrehmoment gemeinsam ein Minimum erreichen.

Nach dem Durchführen des Gangwechsels wird das Drehmoment des Elektromotors wieder auf das passende Unterstützungsdrehmoment angehoben.

Bei dem Verringern des Drehmomentes wird der Elektromotor vorzugsweise nicht vollständig abgeschaltet, da dies zu einer Beschädigung der Elektronik durch Blindströme aufgrund von Induktionsphänomenen führen kann.

Um das Drehmoment möglichst schlagartig verringern zu können, kann es ggf. sinnvoll sein, den Freilauf des Maschinenzahnrades, das von der elektrischen Maschine aufgehend die Vorgelegewelle (oder die Eingangswelle, je nach Variante) antreibt, zu deaktivieren. Dies kann beispielsweise durch die innenliegende Nockenwelle realisiert werden, die die entsprechende Schaltklinke des schaltbaren Freilaufes deaktiviert.

Das oben beschriebene Verfahren basiert auf der Tatsache, dass sämtliche Antriebskomponenten durch ihre Elastizitäten sowohl Feder- als auch Dämpfungseigenschaften aufweisen. Die Komponenten stellen mit diesen Eigenschaften mechanische Energiespeicher dar. Aufgrund des "Vorspannens" des Antriebsstranges beim Erhöhen des Drehmomentes der elektrischen Maschine wird die gespeicherte Energie des Antriebsstranges (Teilgetriebe, Kette oder Riemen, Speichen des Hinterrades, Reifen des Hinterrades) auf ein höheres Niveau angehoben. Da die Last (Fahrwiderstand) am Hinterrad träge ist (Dämpfungseigenschaften), und da auch das von dem Fahrer erzeugte Antriebsmoment nicht schlagartig veränderbar ist (Dämpfungseigenschaften), wirkt die schlagartig freigesetzte Energie des vorgespannten Antriebsstranges dem verspannten Gesamtsystem entgegen. Dadurch, dass die Systemein- und ausgänge träge sind, ergibt sich entsprechend der zeitlichen Abhängigkeit der Trägheiten der oben beschriebene kurze lastfreie Zeitraum des übertragenden Systems, der dazu genutzt werden kann, den Gang in einem zumindest nahezu lastfreien Zustand zu wechseln.

Ausführungsbeispiele der Erfindung sind in den Zeichnungen dargestellt und werden in der nachfolgenden Beschreibung näher erläutert. Es zeigen:
- Fig. 1: einen Fahrradrahmen mit einer Ausführungsform einer erfindungsgemäßen Antriebseinheit;
- Fig. 2: eine weitere Ausführungsform einer erfindungsgemäßen Antriebseinheit in perspektivischer Darstellung ohne Gehäuse;
- Fig. 3: eine schematische Darstellung einer weiteren Ausführungsform einer erfindungsgemäßen Antriebseinheit;
- Fig. 4: eine schematische Darstellung einer weiteren Ausführungsform einer erfindungsgemäßen Antriebseinheit;
- Fig. 5: eine schematische Darstellung einer weiteren Ausführungsform einer erfindungsgemäßen Antriebseinheit;
- Fig. 6: eine schematische Darstellung einer weiteren Ausführungsform einer erfindungsgemäßen Antriebseinheit;
- Fig. 7: eine schematische Darstellung einer weiteren Ausführungsform einer erfindungsgemäßen Antriebseinheit;
- Fig. 8: eine Explosionsdarstellung der in Fig. 2 dargestellten Antriebseinheit mit Gehäuse;
- Fig. 9: eine schematische Längsschnittansicht durch einen Teil der Antriebseinheit der Figuren 2 und 8;
- Fig. 10: ein Zeitablaufdiagramm von Drehmomenten über der Zeit bei einem erfindungsgemäßen Verfahren zum Betreiben der Antriebseinheit; und
- Fig. 11: eine schematische Darstellung einer weiteren Ausführungsform einer erfindungsgemäßen Antriebseinheit.

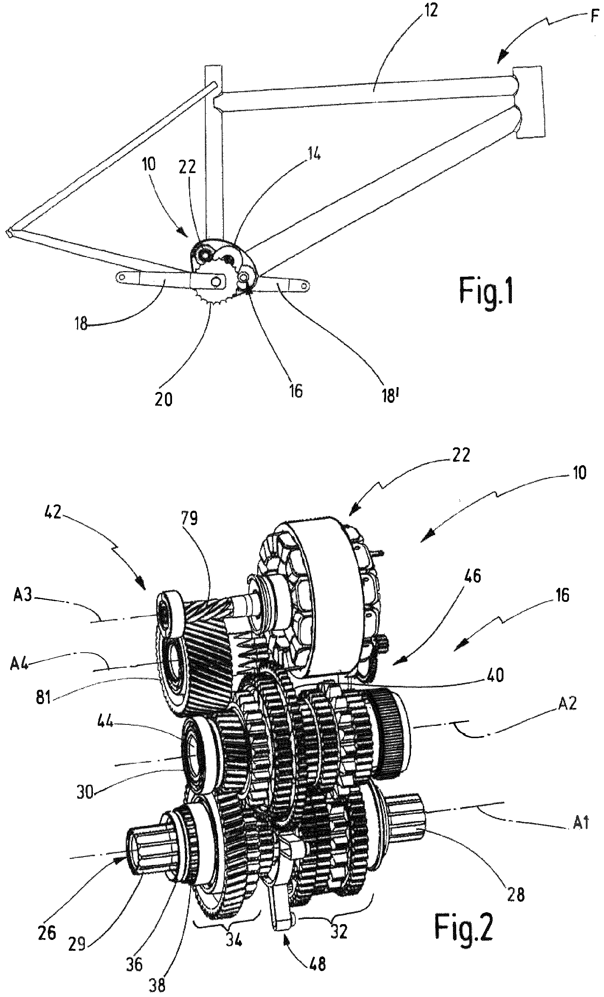

In Fig. 1 ist in schematischer Form eine Antriebseinheit 10 für ein Fahrzeug wie ein Fahrrad F dargestellt. Die Antriebseinheit 10 ist in einen Fahrradrahmen 12 integriert, und zwar im Bereich eines Tretlagers. Die Antriebseinheit 10 kann dabei so in den Fahrradrahmen 12 integriert sein, dass die Antriebseinheit 10 das Tretlager bildet.

Die Antriebseinheit 10 weist ein Gehäuse 14 auf, das an seinem Außenumfang mit einem Sattelrohr und einem Unterrohr (Hauptrohr) des Fahrradrahmens 12 verbunden ist.

In dem Gehäuse 14 ist eine Getriebeanordnung 16 aufgenommen, die dazu ausgebildet ist, eine Antriebsbewegung, die über Kurbeln 18 in die Getriebeanordnung 16 eingeleitet wird, in eine Rotation eines Kettenblattes oder Riemenrades 20 umzusetzen, und zwar mit einer Anzahl von unterschiedlichen geeigneten Übersetzungen.

In dem Gehäuse 14 ist ferner eine elektrische Maschine 22 aufgenommen, die zusätzliche Antriebsleistung in die Getriebeanordnung einspeisen kann.

Das Fahrrad F ist folglich als E-Bike bzw. Pedelec ausgestaltet. Vorzugsweise wird die elektrische Maschine 22 nur dann dazu angesteuert, um Antriebsleistung bereitzustellen, wenn auch ein Drehmoment über wenigstens eine der Kurbeln 18 eingeleitet wird.

In Fig. 2 ist eine bevorzugte Ausführungsform einer solchen Antriebseinheit 10 perspektivisch dargestellt.

Die Antriebseinheit 10 weist eine Antriebswelle 26 auf, die als Kurbelwelle ausgebildet ist. An ihren axialen Enden weist die Antriebswelle 26 Kurbelsteckabschnitte 28 auf, auf die die Kurbeln 18 axial aufgesteckt werden können.

Die Antriebseinheit 10 weist ferner eine Vorgelegewelle 30 auf, die achsparallel versetzt zu der Antriebswelle 26 angeordnet ist.

Ein erstes Teilgetriebe 32 verbindet die Antriebswelle 26 und die Vorgelegewelle 30. Ein zweites Teilgetriebe 34 verbindet die Vorgelegewelle 30 mit einer Ausgangswelle 36. Die Ausgangswelle 36 ist koaxial zu der Antriebswelle 26 angeordnet, und zwar in Form einer Hohlwelle um die Antriebswelle 26 herum. An der Ausgangswelle 36 ist eine Steckverzahnung 38 vorgesehen, auf die das Kettenblatt bzw. Riemenrad 20 axial aufgeschoben werden kann.

Die Getriebeanordnung 16 beinhaltet ferner ein Maschinenzahnrad 40, über welches Antriebsleistung der elektrischen Maschine 22 in die Getriebeanordnung 16 eingeleitet werden kann. Die elektrische Maschine 22 ist achsparallel zu der Vorgelegewelle 30 und der Antriebswelle 26 angeordnet. Die elektrische Maschine 22 ist über ein Untersetzungsgetriebe bzw. eine Vorübersetzung 42 mit dem Maschinenzahnrad 40 verbunden.

Die Antriebswelle 26 ist koaxial zu einer Achse A1. Die Vorgelegewelle 30 ist koaxial zu einer Achse A2. Die elektrische Maschine 22 ist koaxial zu einer Achse A3. Das Untersetzungsgetriebe bzw. die Vorübersetzung 42 weist eine nicht näher bezeichnete Vorübersetzungswelle auf, die auf einer Achse A4 liegt.

Konzentrisch zu der Vorgelegewelle 30 ist eine Nockenwelle 44 vorgesehen. Die Nockenwelle 44 ist radial innerhalb der Vorgelegewelle 30 angeordnet und dient dazu, schaltbare Gangradsätze des ersten Teilgetriebes 32 und des zweiten Teilgetriebes 34 zu schalten. Die Nockenwelle 44 ist über ein Drehzahlüberlagerungsgetriebe 46 mit der Vorgelegewelle 30 gekoppelt, derart, dass die Nockenwelle 44 im Betrieb generell mit der gleichen Drehzahl dreht wie die Vorgelegewelle. Über das Drehzahlüberlagerungsgetriebe 46 kann jedoch auch eine Relativverdrehung eingerichtet werden, um auf diese Weise die einzelnen Gangradsätze anzuwählen und zu schalten.

Die Getriebeanordnung 16 weist ferner eine Drehmomenterfassungseinrichtung 48 zur Erfassung eines in die Antriebswelle 26 eingeleiteten Muskelkraft-Drehmomentes auf. Die Drehmomenterfassungseinrichtung 48 kann mit einer nicht näher dargestellten Steuereinrichtung verbunden sein.

Die nicht näher dargestellte Steuereinrichtung ist dazu eingerichtet, die elektrische Maschine 22 in Abhängigkeit eines von der Drehmomenterfassungseinrichtung 48 erfassten Drehmomentes anzusteuern, um bedarfsweise zusätzliches Antriebsmoment bereitzustellen.

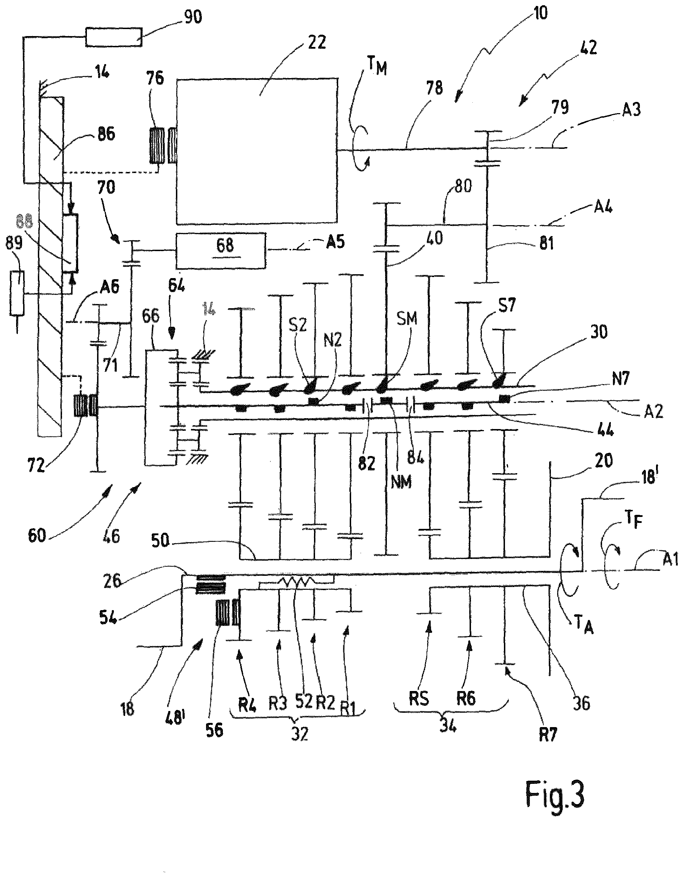

In Fig. 3 ist eine weitere Ausführungsform einer erfindungsgemäßen Antriebseinheit dargestellt, die hinsichtlich Aufbau und Funktionsweise generell der Antriebseinheit 10 der Fig. 2 entspricht. Gleiche Elemente sind daher durch gleiche Bezugszeichen gekennzeichnet. Im Folgenden werden im Wesentlichen die Unterschiede erläutert.

Wie es in Fig. 3 zu erkennen ist, ist die Antriebswelle 26 über eine Torsionsfeder 52 der Drehmomenterfassungseinrichtung 48' mit einer Eingangswelle 50 gekoppelt. Die Eingangswelle 50 ist als Hohlwelle um die Antriebswelle 26 herum angeordnet, und zwar axial versetzt gegenüber der Ausgangswelle 36.

Ein Verdrehwinkelsensor 56 der Drehmomenterfassungseinrichtung 48' erfasst eine relative Verdrehung der Eingangswelle 50 in Bezug auf die Antriebswelle 26. Der so gemessene Verdrehwinkel ist vorzugsweise proportional zu einem in die Antriebswelle 26 eingeleiteten Drehmoment.

Ferner ist ein Drehpositionssensor bzw. Kurbellagesensor 54 vorgesehen, der eine absolute Drehposition der Eingangswelle 50 erfasst.

Das erste Teilgetriebe 32 weist eine Mehrzahl von vier schaltbaren Radsätzen R1, R2, R3, R4 auf, die jeweils ein mit der Eingangswelle 50 drehfest verbundenes Festrad und ein an der Vorgelegewelle 30 drehbar gelagertes Losrad beinhalten. Das zweite Teilgetriebe 34 weist eine weitere Mehrzahl von Radsätzen R5, R6, R7 auf. Die Radsätze des zweiten Teilgetriebes weisen jeweils ein mit der Ausgangswelle 36 drehfest verbundenes Festrad und ein an der Vorgelegewelle 30 drehbar gelagertes Losrad auf.

Die Nockenwelle 44 weist eine Mehrzahl von Nocken auf, die der Mehrzahl von Radsätzen des ersten und des zweiten Teilgetriebes entspricht. In Fig. 3 sind aus Übersichtlichkeitsgründen nur ein Schaltnocken N2 für den Radsatz R2 und der Schaltnocken N7 für den Radsatz R7 mit Bezugszeichen versehen.

Die Losräder der Radsätze R1 bis R7 sind jeweils über schaltbare Freiläufe mit der Vorgelegewelle 30 verbunden. Die schaltbaren Freiläufe weisen jeweils Schaltklinken auf, die mittels der Schaltnocken (z.B. N2, N7) aktivierbar sind. In der gezeigten relativen Drehstellung der Nockenwelle 44 in Bezug auf die Vorgelegewelle 30 der Fig. 3 aktivieren die Schaltnocken N2 und N7 die Schaltklinken S2 und S7, so dass in der gewöhnlichen Vorwärtsdrehrichtung der Antriebswelle 26 zum Antrieb des Fahrrades F die Losräder der Radsätze R2 und R7 mit der Vorgelegewelle 30 gekoppelt sind. Die Losräder der anderen Radsätze R1, R3, R4, R5, R6 sind hingegen von der Vorgelegewelle 30 entkoppelt. In der Darstellung der Fig. 3 kann folglich ein Antriebsdrehmoment, das in die Antriebswelle 26 eingeleitet wird, über die Torsionsfeder 52 in die Eingangswelle 50 eingeleitet werden, und von dort über den Radsatz R2 in die Vorgelegewelle 30. Von der Vorgelegewelle 30 kann das Drehmoment dann über den Radsatz R7 des zweiten Teilgetriebes 34 in die Ausgangswelle 36 eingeleitet werden.

Zur Relativverdrehung der Nockenwelle 44 in Bezug auf die Vorgelegewelle 30 ist eine Schaltvorrichtung 60 vorgesehen.

Die Schaltvorrichtung 60 weist eine Planetenradsatzanordnung 64 auf, die das Drehzahlüberlagerungsgetriebe 46 bildet. Die Planetenradsatzanordnung 64 weist einen ersten Planetenradsatz auf, dessen Sonnenrad mit der Vorgelegewelle 30 verbunden ist, dessen Hohlrad mit dem Gehäuse 14 gekoppelt ist und dessen Planetenträger mit dem Planetenträger eines zweiten Planetenradsatzes verbunden ist. Das Sonnenrad des zweiten Planetenradsatzes ist mit der Nockenwelle 44 verbunden. Das Hohlrad 66 des weiteren Planetenradsatzes dient zum Einleiten von Relativverdrehungen zwischen der Nockenwelle 44 und der Vorgelegewelle 30. Das Hohlrad 66 ist über ein Drehzahlanpassungsgetriebe 70 mit einem Schaltmotor 68 in Form eines Elektromotors verbunden. Der Schaltmotor 68 ist koaxial zu einer Achse A5 angeordnet. Das Drehzahlanpassungsgetriebe 70 weist eine Drehzahlanpassungswelle 71 auf, die auf einer Achse A6 liegt. Ein mit dem Schaltmotor 68 verbundenes Ritzel ist mit einem ersten Festrad der Drehzahlanpassungswelle 71 verbunden. Ein zweites Festrad der Drehzahlanpassungswelle 71 ist mit einem Antriebsrad verbunden, das drehfest mit dem Hohlrad 66 verbunden ist. Eine Drehposition des Hohlrades 66 ist über einen Schaltlagesensor 72 erfassbar.

Im Stand der Technik, wie er eingangs erwähnt wurde, wurde ein derartiges Hohlrad 66 in der Regel von Hand betätigt. Vorliegend erfolgt das Schalten von Gangstufen bei der Antriebseinheit 10 jedoch aktuatorisch, und zwar über den Schaltmotor 68.

Die elektrische Maschine 22 weist einen nicht näher bezeichneten Rotor auf, dessen Rotorposition über einen Rotorlagesensor 76 ermittelbar ist.

Die elektrische Maschine 22 stellt ein Maschinendrehmoment T_{M} bereit, das in eine Maschinenwelle 78 eingeleitet wird. Das Maschinendrehmoment T_{M} ist mit einem Drehmoment T_{F} eines Fahrers, das in die Antriebswelle 26 eingeleitet wird, kombinierbar, derart, dass an der Ausgangswelle 36 ein Ausgangsdrehmoment T_{A} bereitgestellt wird, das in das Kettenblatt bzw. Riemenrad 20 eingeleitet wird.

Die Getriebeanordnung 16 weist, wie oben erwähnt, ein Maschinenzahnrad 40 auf, das drehbar an der Vorgelegewelle 30 gelagert ist. Die Maschinenwelle 78 ist über die Vorübersetzung 42 mit dem Maschinenzahnrad 40 verbunden. Genauer gesagt weist die Vorübersetzung 42 eine Vorübersetzungswelle 80 auf, die auf der Achse A4 liegt und die über einen ersten Konstanten-Radsatz mit der Maschinenwelle 78 verbunden ist und ein Festrad aufweist, das in Eingriff steht mit dem Maschinenzahnrad 40.

Das Maschinenzahnrad 40 ist über einen schaltbaren Freilauf mit der Vorgelegewelle 30 verbindbar. In Fig. 3 ist dargestellt, dass der schaltbare Freilauf aktiviert ist, wobei eine Freilauf-Schaltklinke SM die Vorgelegewelle 30 mit dem Maschinenzahnrad 40 verbindet. Die Freilauf-Schaltklinke SM ist mittels eines Schaltnockens NM der Nockenwelle 44 betätigbar. Der Schaltnocken NM kann an einem eigenen Abschnitt der Nockenwelle 44 ausgebildet sein, der über einen ersten drehpositionsabhängigen Mitnehmer 82 mit einem Abschnitt der Nockenwelle 44 verbunden ist, der dem ersten Teilgetriebe 32 zugeordnet ist. Der Abschnitt der Nockenwelle 44, an dem der Schaltnocken NM ausgebildet ist, ist ferner über den zweiten drehpositionsabhängigen Mitnehmer 84 mit einem Abschnitt der Nockenwelle 44 verbunden, der den zweiten Teilgetriebe 34 zugeordnet ist.

Die Antriebseinheit 10 weist ferner eine Leiterplatte 86 auf, an der eine Steuereinrichtung 88 ausgebildet ist. Die Steuereinrichtung 88 erhält Signale von den diversen Sensoren 54, 56, 72, 76 und stellt Ansteuerungssignale für eine Leistungselektronik der elektrischen Maschine 22 sowie des Schaltmotors 68 bereit. Ferner ist die Steuereinrichtung 88 mit einer Schalteinheit bzw. einem Schalter 89 verbunden, der beispielsweise im Bereich eines Lenkers des Fahrrades F angeordnet werden kann und über den Schaltsignale in Form eines Schaltwunsches oder dergleichen auslösbar sind.

Sofern ein derartiger Schaltwunsch über die Schalteinheit 89 erhalten wird, steuert die Steuereinrichtung 88 den Schaltmotor 68 an, um den gewünschten Schaltvorgang durchzuführen, bei dem die Nockenwelle 44 relativ zu der Vorgelegewelle 30 verdreht wird. Dies erfolgt vorzugsweise auf koordinierter Art und Weise, wie es nachfolgend noch beschrieben werden wird.

Die Steuereinrichtung 88 ist ferner mit einer Autorisierungseinheit 90 verbunden. Die Autorisierungseinheit 90 kann beispielsweise eine Eingabeeinheit für einen Autorisierungscode beinhalten, wobei aufgrund dieses Codes dann ein Autorisierungssignal erzeugt wird, das der Steuereinrichtung 88 übermittelt wird. Nur dann, wenn ein richtiges Autorisierungssignal erhalten wird, wird die Steuereinrichtung 88 (und/oder die Getriebeanordnung) aktiviert.

Die Autorisierungseinheit 90 kann mit der Schalteinheit 89 in eine Baugruppe integriert sein, die im Bereich eines Lenkers des Fahrrades montierbar ist.

Mit der Antriebseinheit 10 sind folgende Betriebsmodi realisierbar. Zum einen ist ein rein muskelkraftbetriebener Modus denkbar. Hierzu wird vorzugsweise der schaltbare Freilauf des Maschinenzahnrades 40 deaktiviert, indem die Nockenwelle 44 so verdreht wird, dass der Schaltnocken NM die Freilauf-Schaltklinke SM in eine Deaktivierungsposition versetzt, so dass Antriebsleistung der elektrischen Maschine 22 nicht mehr in die Vorgelegewelle 30 eingespeist werden kann.

Für einen Pedelec-Betriebsmodus wird hingegen die Freilauf-Schaltklinke SM aktiviert. Über die Drehmomenterfassungseinrichtung 48 wird ein per Muskelkraft in die Antriebswelle 26 eingeleitetes Drehmoment T_{F} erfasst. Die Steuereinrichtung steuert dann die elektrische Maschine 22 so an, dass diese ein elektrisches Antriebsmoment T_{M} zusätzlich bereitstellt, und zwar vorzugsweise in Abhängigkeit von verschiedenen Unterstützungsmodi (Eco, Normal oder Turbo, um ein paar Beispiele zu nennen). Hierbei wird das Drehmoment T_{M} so eingestellt, dass im Bereich der Ausgangswelle 36 ein Gesamtausgangsmoment T_{A} bereitgestellt wird, das sich aus dem Fahrermoment T_{F} und einem elektrischen Antriebsmoment T_{M} zusammensetzt, das typischerweise einen Wert des 0,5-fachen bis 4-fachen des Fahrer-Drehmomentes T_{F} darstellt.

In manchen Ländern ist die elektromotorische Unterstützung auf eine bestimmte Geschwindigkeitsschwelle beschränkt, beispielsweise 25 km/h. Wenn der Fahrer durch Muskelkraft eine höhere Fahrzeuggeschwindigkeit einrichtet, überholt die Vorgelegewelle 30 das Maschinenzahnrad 40. Sofern das hierbei auftretende Schaltklicken des schaltbaren Freilaufes als störend empfunden wird, kann die Steuereinrichtung 88 den Freilauf deaktivieren.

Die Steuereinrichtung 88 kann den schaltbaren Freilauf mit der Schaltklinke SM auch beispielsweise nur dann aktivieren, wenn ein gültiges Autorisierungssignal erfasst worden ist.

Sofern in einem Fehlerzustand ein unzulässiges Drehmoment von Seiten der elektrischen Maschine 22 bereitgestellt wird, kann die Steuereinrichtung 88 den schaltbaren Freilauf mit der Schaltklinke SM ebenfalls deaktivieren.

Sofern ein Schaltwunsch über die Schalteinheit 89 erfasst wird, initiiert die Steuereinrichtung 88 einen Schaltvorgang von wenigstens einem der Radsätze mittels der Schaltvorrichtung 60 so, dass dieser Schaltvorgang während einer Zeitspanne durchgeführt wird, bei der ein periodisch auf eine Antriebswelle wirkendes Muskelkraft-Drehmoment T_{F} minimal ist. Alternativ oder zusätzlich hierzu wird bei Erfassung eines solchen Schaltwunsches zunächst ein von der elektrischen Maschine bereitgestelltes Drehmoment für eine erste kurze Zeitspanne erhöht, um zumindest die Getriebeanordnung zu verspannen, und anschließend wird das von der elektrischen Maschine bereitgestellte Drehmoment schnell verringert, um die Getriebeanordnung für eine zweite kurze Zeitspanne in einen Zustand der Lastfreiheit zu versetzen. Die Schaltvorrichtung wird dabei zeitlich so angesteuert, dass ein Schalten des Gangradsatzes in diese zweite kurze Zeitspanne fällt.

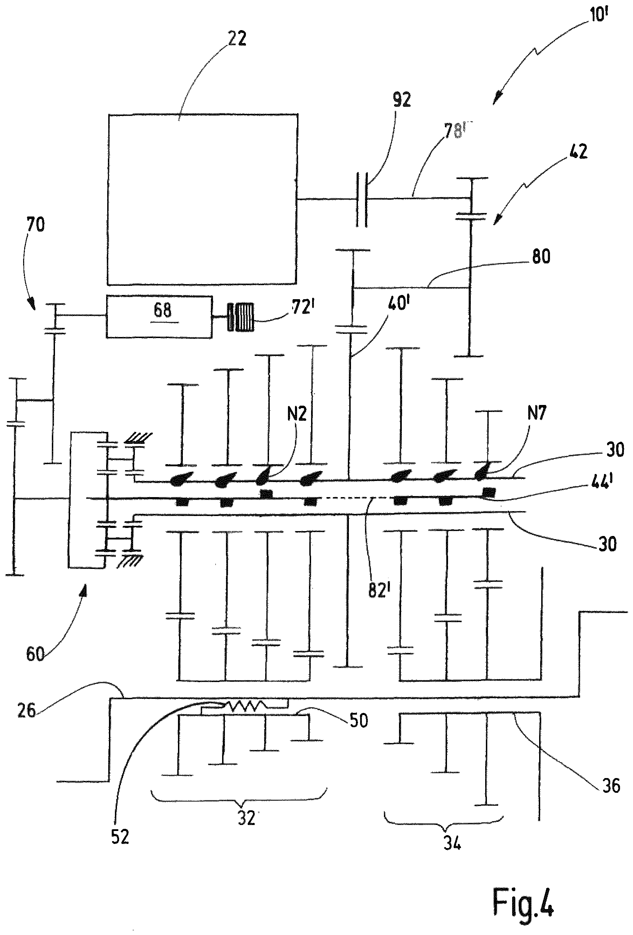

In den Figuren 4 bis 7 sind weitere Ausführungsformen von Antriebseinheiten dargestellt, die hinsichtlich Aufbau und Funktionsweise generell der Antriebseinheit 10 der Fig. 3 entsprechen. Gleiche Elemente sind daher durch gleiche Bezugszeichen gekennzeichnet. Im Folgenden werden im Wesentlichen die Unterschiede erläutert.

Bei der Antriebseinheit 10' der Fig. 4 ist der Rotor der elektrischen Maschine 22 über eine mittels der Steuereinrichtung 88 schaltbare Trennkupplung oder Freilauf mit der Maschinenwelle 78' verbunden. Das Maschinenzahnrad 40' ist in diesem Fall drehfest mit der Vorgelegewelle 30 verbunden. Die Nockenwelle 44' kann als durchgehende Welle ausgebildet sein, oder es kann zwischen einem Abschnitt, der dem ersten Teilgetriebe 32 zugeordnet ist, und einem Abschnitt, der dem zweiten Teilgetriebe 34 zugeordnet ist, ein drehpositionsabhängiger Mitnehmer 82' vorgesehen sein.

Die Trennkupplung 92 kann eine normalerweise geöffnete Kupplung sein, die durch einen nicht näher dargestellten Aktuator geschlossen wird, wenn die elektrische Maschine 22 Antriebsmoment bereitstellen soll. Alternativ hierzu kann die Trennkupplung 92 auch eine normalerweise geschlossene Kupplung sein, die im Bedarfsfall mittels eines Aktuators geöffnet wird. Ein solcher Aktuator ist typischerweise mit der Steuereinrichtung 88 verbunden. Der Aktuator kann beispielsweise ein Elektromagnetaktuator oder ein anderer Aktuator sein.

In Fig. 4 ist ferner dargestellt, dass der Schaltlagesensor 72' mit einem Rotor des Schaltmotors 68 verbunden ist. Diese Ausführungsform eines Schaltlagesensors 72 ist konstruktiv einfach realisierbar. Allerdings ist die Schaltlage möglicherweise beeinflusst durch ein Spiel in dem Drehzahlanpassungsgetriebe 70, so dass eine Erfassung der Schaltlage des Hohlrades 66 über einen Schaltlagesensor 72, wie er in Fig. 3 gezeigt ist, bevorzugt ist.

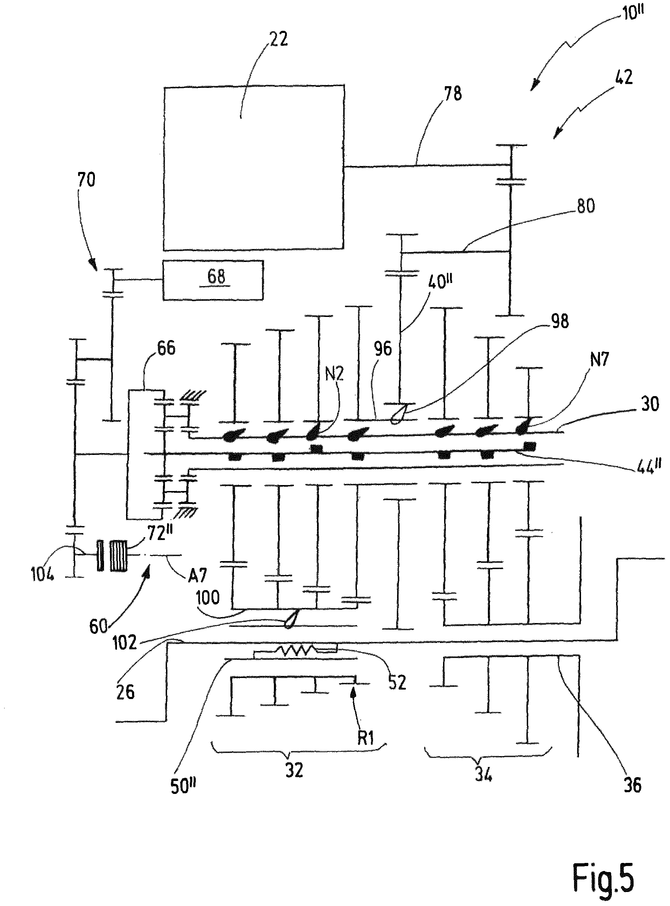

In Fig. 5 ist eine weitere Ausführungsform einer Antriebseinheit 10" dargestellt, die auf der Ausführungsform der Fig. 3 basiert.

Anstelle des schaltbaren Freilaufes mit der Schaltklinke SM ist das Maschinenzahnrad 40" über einen nicht schaltbaren Freilauf 98 mit einer Zwischenwelle 96 verbunden, die koaxial um die Vorgelegewelle 30 herum angeordnet ist. Die Zwischenwelle 96 ist drehfest mit dem Losrad von einem der Radsätze des ersten Teilgetriebes (oder des zweiten Teilgetriebes) verbunden. Der nicht schaltbare Freilauf kann auch stirnseitig an dem Maschinenzahnrad 40" angebracht sein. In diesem Fall kann der Freilauf direkt zwischen dem Maschinenzahnrad 40" und dem Losrad von einem der Radsätze des ersten Teilgetriebes (oder des zweiten Teilgetriebes) wirken. Die Zwischenwelle 96 kann in diesem Fall entfallen. Vorliegend ist die Zwischenwelle 96 mit dem Losrad des Radsatzes R1 verbunden.

Ferner sind die Festräder der Radsätze R1 bis R4 des ersten Teilgetriebes 32 an einer Festradwelle 100 festgelegt, die koaxial um die Eingangswelle 50" herum angeordnet ist. Die Festradwelle 100 ist über einen weiteren nicht schaltbaren Freilauf 102 mit der Eingangswelle 50" gekoppelt. Hierdurch kann gewährleistet werden, dass keine unzulässigen Drehmomente von der elektrischen Maschine 22 auf die Antriebswelle 26 übertragen werden, die, wie bei den vorherigen Ausführungsformen, über eine Torsionsfeder 52 mit der Eingangswelle 50" gekoppelt ist.

In Fig. 5 ist ferner eine Variante eines Schaltlagesensors 72" dargestellt, der an einer Sensorwelle 104 angeordnet ist, die auf einer Achse A7 liegt. Die Sensorwelle 104 ist mit einem Festrad verbunden, das mit dem Zahnrad in Eingriff steht, auf das auch ein Antriebsmoment des Schaltmotors 68 eingeleitet wird und das mit dem Hohlrad 66 des Drehzahlüberlagerungsgetriebes 46 drehfest verbunden ist. Generell kann ein Schaltlagesensor auch bei der Ausführungsform der Fig. 5 jedoch auf eine der beliebigen anderen Arten ausgeführt sein, wie sie weiter vorne beschrieben worden sind, also bspw. auch ohne Sensorwelle bzw. einstückig.

Die Sensorwelle 104 kann dabei gemeinsam mit einem daran festgelegten Festrad aus Kunststoff gefertigt werden, da diese kein Drehmoment übertragen muss.

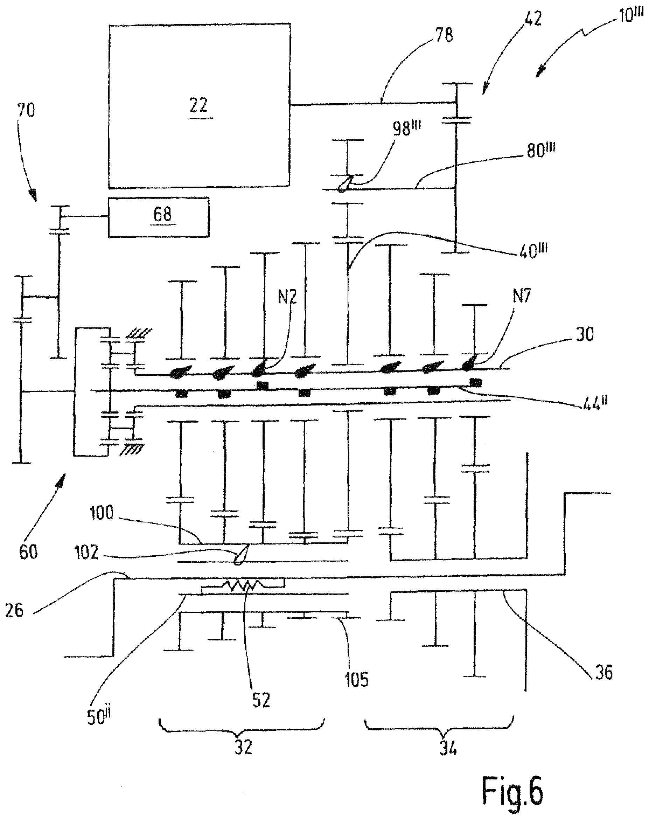

In Fig. 6 ist eine weitere Ausführungsform eines Antriebsstranges dargestellt, die auf der Ausführungsform der Fig. 5 basiert. Bei der Antriebseinheit 10‴ ist an der Vorübersetzungswelle 80‴ ein Losrad drehbar gelagert, das mit dem Maschinenzahnrad 40‴ in Eingriff steht. Das Losrad der Vorübersetzungswelle 80‴ ist über einen nicht schaltbaren Freilauf 98‴ mit der Vorübersetzungswelle 80 gekoppelt. Das Maschinenzahnrad 40‴ ist drehbar an der Vorgelegewelle 30 gelagert und steht mit einem Festrad 105 in Eingriff, das an der Festradwelle 100 gelegt ist. Demzufolge kann Antriebsleistung der elektrischen Maschine 22 in die Festradwelle 100 eingeleitet werden und von dort über das erste Teilgetriebe 32 und das zweite Teilgetriebe 34 auf die Ausgangswelle 36.

Wie bei der Ausführungsform der Fig. 5 ist die Festradwelle 100 über einen zweiten nicht schaltbaren Freilauf 102 mit der Eingangswelle 50" gekoppelt.

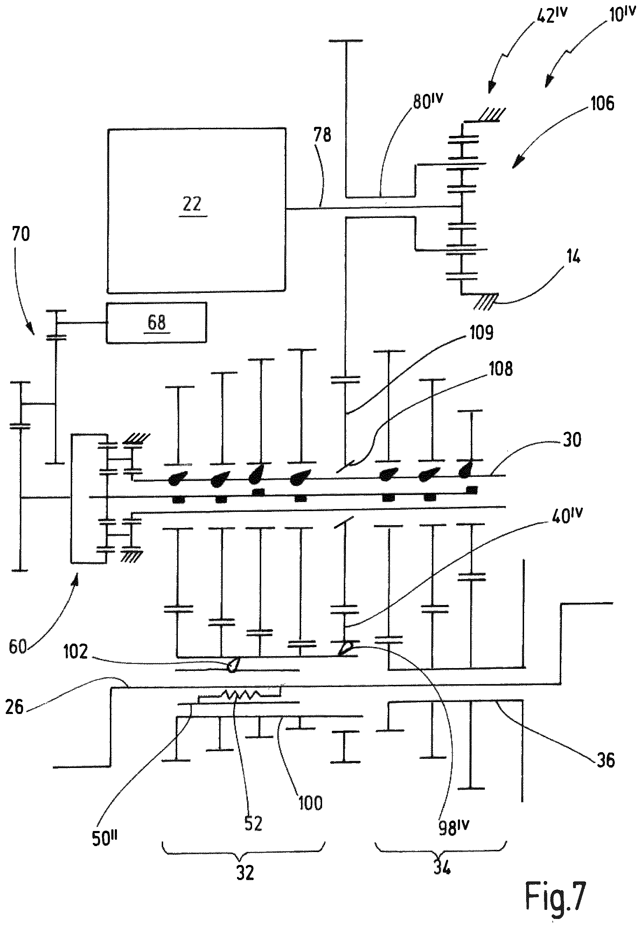

In Fig. 7 ist eine weitere Ausführungsform einer Antriebseinheit 10^{IV} gezeigt, die auf der Ausführungsform der Fig. 3 und 6 basiert. Bei der Antriebseinheit 10^{IV} beinhaltet die Vorübersetzung 42^{IV} einen Planetenradsatz 106, der drei Glieder aufweist, von denen eines (vorliegend das Hohlrad) mit dem Gehäuse 14 verbunden ist. Ein weiteres Glied ist mit der Maschinenwelle 78 verbunden (vorliegend das Sonnenrad). Ein drittes Glied (vorliegend der Planetenträger) ist mit einer Vorübersetzungswelle 80^{IV} verbunden, die vorliegend als Hohlwelle 80^{IV} um die Maschinenwelle 78 herum angeordnet ist. Die Vorübersetzungswelle 80^{IV} ist mit einem Festrad verbunden, das mit einem Zwischenrad 109 in Eingriff steht, das an einer Nebenwelle 108 festgelegt ist. Die Nebenwelle 108 ist in Fig. 7 als koaxial zu der Vorgelegewelle 30 eingezeichnet. In einer bevorzugten Ausführungsform ist die Nebenwelle 108 jedoch achsparallel zu der Vorgelegewelle 30 angeordnet. Das Zwischenrad 109 steht in Eingriff mit einem Maschinenzahnrad 40^{IV}, das drehbar an einer Zwischenwelle/Festradwelle 100 gelagert ist, die koaxial zu der Antriebswelle 26 angeordnet ist. Die Festradwelle 100 ist über einen nicht schaltbaren Freilauf 98^{IV} mit dem Maschinenzahnrad 40^{IV} gekoppelt. Ferner ist die Festradwelle 100 über einen zweiten nicht schaltbaren Freilauf 102 mit der Eingangswelle 50" gekoppelt, wie bei den Ausführungsformen der Fig. 5 und 6.

Funktional entspricht die Ausführungsform der Fig. 7 folglich jener der Fig. 6.

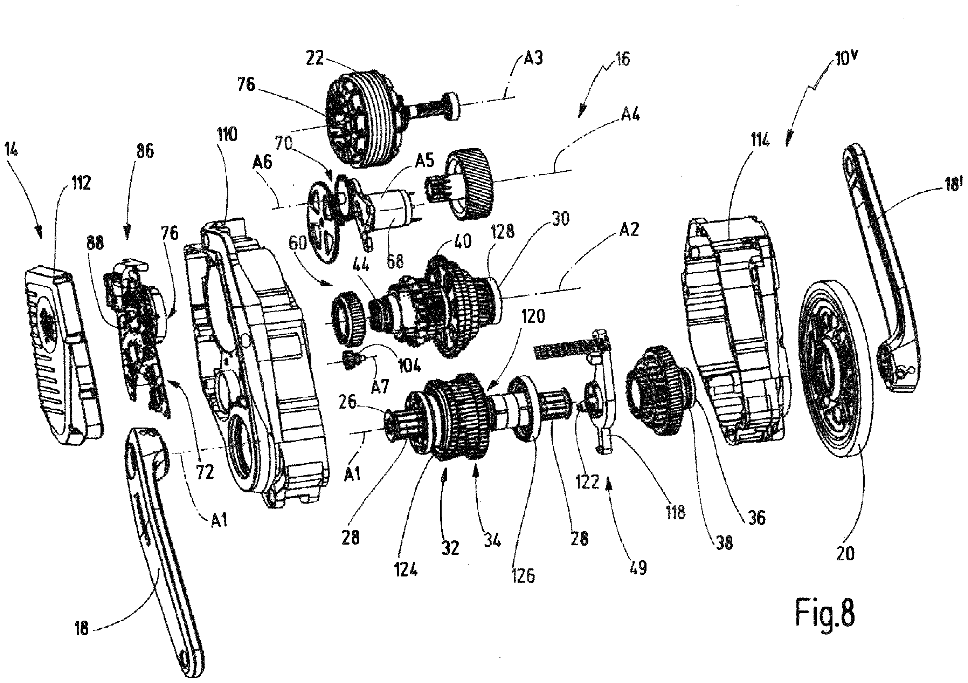

In Fig. 8 ist eine Explosionsansicht einer Antriebseinheit 10^{V} dargestellt, die vom Aufbau her der Antriebseinheit 10 der Fig. 2 und 3 entspricht. Es ist zu erkennen, dass das Gehäuse 14 ein Basisgehäuse 110 aufweist, sowie einen ersten Gehäusedeckel 112 und einen zweiten Gehäusedeckel 114.

Ein Bereich zwischen dem Basisgehäuse 110 und dem ersten Gehäusedeckel 112 ist zur Aufnahme der Leiterplatte 86 mit dem daran festgelegten Rotorlagesensor 76 und dem daran festgelegten Schaltlagesensor 72 ausgebildet. Der Raum zwischen dem Basisgehäuse 110 und dem ersten Gehäusedeckel 112 ist vorzugsweise fluidfrei. In dem Basisgehäuse 110 sind zu diesem Zweck geeignete Dichtungen vorgesehen.

Der erste Gehäusedeckel 112 und der zweite Gehäusedeckel 114 werden in axialer Richtung auf das Basisgehäuse 110 aufgesetzt.

In einem Raum, der durch das Basisgehäuse 110 und den zweiten Gehäusedeckel 114 gebildet ist, ist die Getriebeanordnung 16 zusammen mit der elektrischen Maschine 22 aufgenommen. Die elektrische Maschine 22 ist jedoch vorzugsweise so darin aufgenommen, dass zumindest der Stator bzw. dessen Anschlüsse (vorzugsweise auch der Rotor) gegenüber einem Fluidraum abgedichtet ist, der durch das Basisgehäuse 110 und dem zweiten Gehäusedeckel 114 gebildet ist. Der Stator der elektrischen Maschine 22 wird über Steckkontakte mit der Leiterplatte 86 kontaktiert. Der Rotor der elektrischen Maschine 22 weist vorzugsweise Permanentmagnete auf, die keine elektrische Kontaktierung benötigen. An dem Rotor der elektrischen Maschine 22 ist jedoch vorzugsweise ein Teil des Rotorlagesensors 76 vorgesehen, der mit dem anderen Teil an der Leiterplatte 86 zusammenwirkt.

In Fig. 8 ist ferner eine Drehmomenterfassungseinrichtung 48 gezeigt, die einen Permanentmagnet 120 beinhaltet, der beispielsweise an der Eingangswelle 50 oder an der Antriebswelle 26 festgelegt ist. Ferner weist die Drehmomenterfassungseinrichtung 48 mindestens einen Hall-Sensor 122 auf, der an einer koaxial zu der Antriebswelle 26 angeordneten Sensoreinheit 118 festgelegt ist, die über angedeutete Kabel mit einer Steuereinrichtung 88 verbunden ist.

In Fig. 8 ist ferner zu erkennen, dass der Schaltlagesensor 72 in ähnlicher Weise aufgebaut sein kann, wie es in Fig. 5 gezeigt ist, mit einer Sensorwelle 104, die auf einer Achse A7 angeordnet ist.

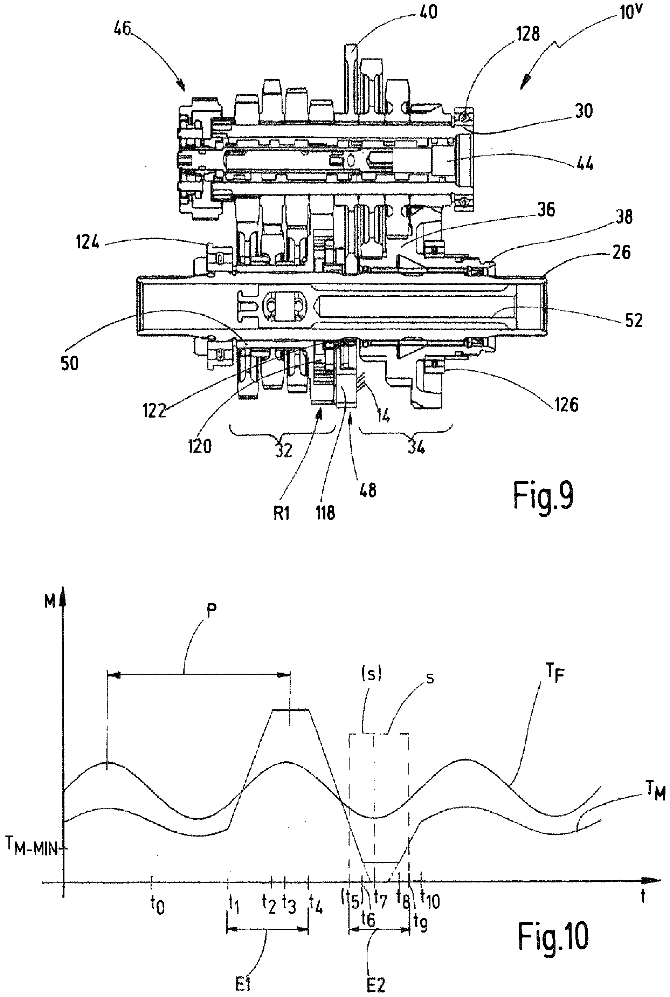

Fig. 9 zeigt eine Längsschnittansicht der Antriebseinheit 10^{V}. Zu erkennen ist hier, dass die Wellenanordnung mit der Antriebswelle 26 und der Eingangswelle 50 mittels eines ersten Lagers 124 und eines zweiten Lagers 126 drehbar gelagert ist, wobei das erste Lager 124 im Bereich des Basisgehäuses 110 angeordnet ist und wobei das zweite Lager 126 im Bereich des zweiten Gehäusedeckels 114 angeordnet ist.

Die Vorgelegewelle 30 ist zumindest mittels eines dritten Lagers 128 drehbar gelagert, das an dem zweiten Gehäusedeckel 114 ausgebildet ist, und vorzugsweise mittels eines nicht näher bezeichneten Nadellagers auf der axial gegenüberliegenden Seite.

Fig. 10 zeigt ein Zeitablaufdiagramm eines Drehmomentes über der Zeit.

In Fig. 10 ist ein Schaltvorgang dargestellt, der unter Last erfolgen kann.

Fig. 10 zeigt zunächst, dass ein von einem Fahrer bereitgestelltes Drehmoment T_{F} etwa sinusförmig auf die Antriebswelle 26 aufgebracht wird, mit einer Periode P.

Ferner ist zu erkennen, dass vor einem Schaltvorgang von der elektrischen Maschine ein Drehmoment T_{M} bereitgestellt, das etwa synchron verläuft mit dem Fahrer-Drehmoment T_{F} und beispielsweise etwa 70 % bis 80 % des Fahrer-Drehmomentes T_{F} ausmacht. In anderen Ausführungsformen kann das Drehmoment T_{M} jedoch auch deutlich größer sein.

Zu einem Zeitpunkt t₁ wird ein Schaltwunsch von der Steuereinrichtung erfasst, beispielsweise über die Schalteinheit 89.

Hierbei wird dann zunächst das Drehmoment T_{M} der elektrischen Maschine erhöht, und zwar vorzugsweise synchron mit einem Maximum des Fahrer-Drehmomentes T_{F}.

Das Erhöhen des Drehmomentes erfolgt für eine erste Zeitspanne E1, beispielsweise von einem Zeitpunkt t₁ bis zu einem Zeitpunkt t₄. Zu einem Zeitpunkt t₃ ist ein Maximum des Fahrer-Drehmomentes T_{F} erreicht.

Ein Schaltvorgang soll zu einem Zeitpunkt t₇ erfolgen. Zum Zeitpunkt t₄ wird das Drehmoment T_{M} der elektrischen Maschine dann so verringert, dass es zu einem Zeitpunkt t₆ einen Minimalwert T_{M-MIN} erreicht, also nicht auf 0 abgesenkt wird. Dieser Zeitpunkt t₆ liegt zeitlich etwas vor dem Minimum des Fahrer-Drehmomentes T_{F}. Das Verringern des Drehmomentes ab dem Zeitpunkt t₄ wird folglich zeitlich so gelegt, dass der Zeitpunkt t₆ kurz vor dem geplanten Schaltzeitpunkt t₇ liegt.

Nach dem Schaltvorgang, ab einem Zeitpunkt t₈ kann das elektrische Antriebsmoment T_{M} wieder erhöht werden und auf ein normales Unterstützungsniveau angehoben werden, das auch vor dem Schaltvorgang vorlag. Dies ist zum Zeitpunkt t₁₀ erreicht.

Für die zweite kurze Zeitspanne E₂ wird folglich das Drehmoment verringert.

Dadurch, dass das Drehmoment zunächst für die Zeitspanne E₁ erhöht wurde, so dass der Antriebsstrang insgesamt verspannt wurde, und anschließend das Drehmoment schnell bzw. schlagartig verringert wurde, ist der Antriebsstrang insgesamt entspannt, so dass ein Zustand der Lastfreiheit auftritt. Dieser ist beispielsweise in einem Fenster von etwa t₅ bis t₉ gegeben. Vorzugsweise erfolgt ein Schaltvorgang innerhalb eines Zeitfensters von t₆ bis t₈, insbesondere zu einem Zeitpunkt t₇.

Der Schaltvorgang kann folglich zu einem Zeitpunkt erfolgen, zu dem der Antriebsstrang im Wesentlichen lastfrei ist. Demzufolge kann ein Schalten unter Last erfolgen.

Das Erhöhen des Drehmomentes T_{M} wirkt sich nicht auf die Geschwindigkeit des Fahrzeuges auf, und zwar aufgrund der Trägheiten. Entsprechend wirkt sich das Verringern des Drehmomentes T_{M} nicht auf das Fahrverhalten des Fahrzeuges aus, ebenfalls aufgrund der Trägheiten.

Der Fahrer merkt sozusagen nichts davon, dass diese kurzfristige Drehmomenterhöhung und anschließend Drehmomentverringerung stattgefunden haben.

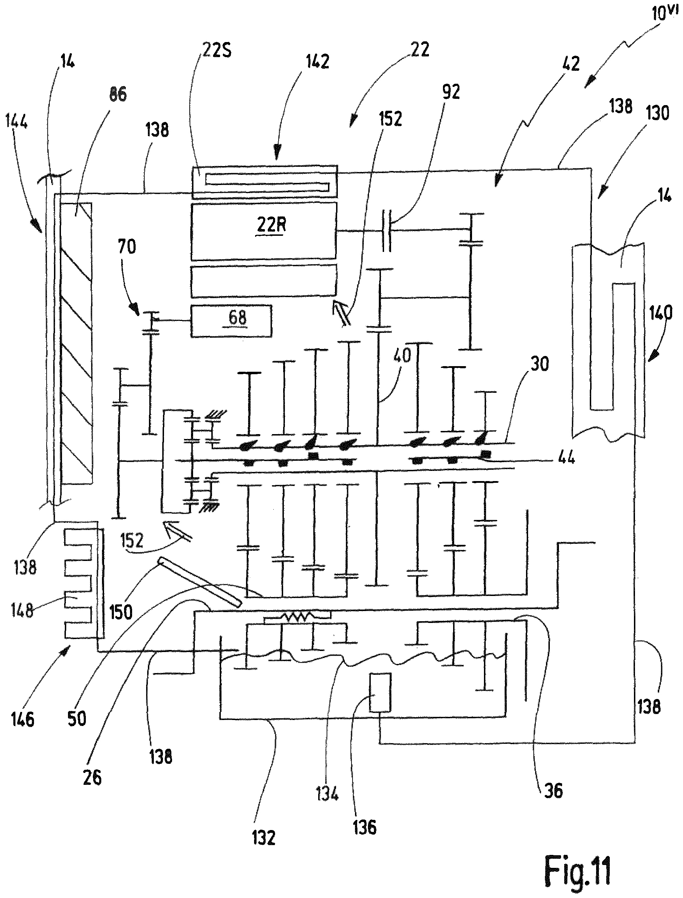

In Fig. 11 ist eine weitere Ausführungsform einer Antriebseinheit 10^{VI} dargestellt, die hinsichtlich der Funktion basiert auf der Antriebseinheit 10' der Fig. 4. Gleiche Elemente sind folglich durch gleiche Bezugszeichen gekennzeichnet. Im Folgenden werden im Wesentlichen die Unterschiede erläutert.

In Fig. 11 ist dargestellt, dass zur Kühlung von Leistungselektronik auf der Leiterplatte 86 und/oder des Stators 22S der elektrischen Maschine 22 eine Kühlanordnung 130 vorgesehen sein kann.

Die Kühlanordnung 130 nutzt zunächst die Tatsache, dass sich in dem Gehäuse 14 ein Fluidsumpf 132 befindet, der im Wege der Tauchschmierung die Radsätze des ersten und des zweiten Teilgetriebes schmiert. Der Fluidsumpf 132 hat ein Fluidniveau 134. Unterhalb des Fluidniveaus 134 ist eine Fluidpumpe 136 angeordnet, die elektromotorisch betrieben wird, beispielsweise angesteuert über die Steuereinrichtung 88, oder durch Kopplung mit einer vorhandenen Welle angetrieben wird.

Die Fluidpumpe 136 pumpt Fluid in eine Fluidleitung 138, die zu einer Mehrzahl von Kühlstellen führt und schließlich wieder in den Fluidsumpf 132 zurückgeführt wird.

In einer ersten Kühlstelle 140 des Gehäuses kann das Fluid beispielsweise durch eine nicht näher dargestellte Luftanströmung des Gehäuses 14 von außen gekühlt werden.

An einer zweiten Kühlstelle 142 wird Wärme des Stators 22S der elektrischen Maschine 22 an das in der Fluidleitung 138 strömende Fluid abgegeben.

Der Stator ist dazu zwischen Wicklungen bzw. Wickelköpfen mit Kühlkanälen versehen. Alternativ kann auch der Gehäusebereich um den Stator mit Kühlkanälen versehen sein.

An einer dritten Kühlstelle 144 wird Wärme von der Leiterplatte 86 an das in der Fluidleitung 138 strömende Fluid abgegeben.

An einer vierten Kühlstelle 146 kann die Fluidleitung 138 durch einen Kühlkörper 148 führen, über den in dem Fluid enthaltene Wärme wieder abgegeben wird, bevor es dem Fluidsumpf wieder zugeführt wird.

Ferner ist in Fig. 11 schematisch angedeutet, dass in dem Gehäuse 14 ein Fluidablenkblech 150 vorgesehen sein kann, über das von den Radsätzen hochgeschleudertes Fluid 152 auf Wärmequellen gerichtet werden kann, beispielsweise auf die Leiterplatte 86 bzw. einen damit verbundenen Kühlkörper, und/oder beispielsweise auf Statorwicklungsköpfe des Stators 22S bzw. auf damit verbundene Kühlkörper.

### Bezugszeichenliste

- 10: Antriebseinheit
- 12: Fahrradrahmen
- 14: Gehäuse
- 16: Getriebeanordnung
- 18: Kurbeln
- 20: Kettenblatt/Riemenrad
- 22: Elektrische Maschine
- 26: Antriebswelle/Kurbelwelle
- 28: Kurbelsteckabschnitte
- 30: Vorgelegewelle
- 32: 1. Teilgetriebe
- 34: 2. Teilgetriebe
- 36: Ausgangswelle
- 38: Steckverzahnung für 20
- 40: Maschinenzahnrad
- 42: Untersetzungsgetriebe/Vorübersetzung
- 44: Nockenwelle
- 46: Drehzahlüberlagerungsgetriebe
- 48: Drehmomenterfassungseinrichtung
- 50: Eingangswelle (16)
- 52: Torsionsfeder (48)
- 54: Verdrehwinkelsensor (48)
- 56: Drehpositionssensor/Kurbellagesensor
- 60: Schaltvorrichtung
- 64: Planetenradsatzanordnung
- 66: Hohlrad
- 68: Schaltmotor
- 70: Drehzahlanpassungsgetriebe
- 71: Drehzahlanpassungswelle
- 72: Schaltlagesensor
- 76: Rotorlagesensor
- 78: Maschinenwelle
- 79: Maschinenritzel
- 80: Vorübersetzungswelle
- 81: Zahnrad
- 82: 1. drehpositionsabhängiger Mitnehmer
- 84: 2. drehpositionsabhängiger Mitnehmer
- 86: Leiterplatte
- 88: Steuereinrichtung
- 89: Schalteinheit
- 90: Autorisierungseinheit
- 91: Autorisierungssignal
- 92: Trennkupplung
- 96: Zwischenwelle
- 98: 1. nicht schaltbarer Freilauf
- 100: Zwischenwelle/Festradwelle
- 102: 2. nicht schalbarer Freilauf
- 104: Sensorwelle
- 105: Festrad
- 106: Planetenradsatz (42)
- 108: Nebenwelle
- 109: Zwischenrad (108)
- 110: Basisgehäuse
- 112: 1. Gehäusedeckel
- 114: 2. Gehäusedeckel
- 118: Sensoreinheit (48)
- 120: Permanentmagnet
- 122: Hall-Sensor
- 124: 1. Lager
- 126: 2. Lager
- 128: 3. Lager
- 130: Kühlanordnung
- 132: Fluidsumpf
- 134: Fluidniveau
- 136: Fluidpumpe
- 138: Fluidleitung
- 140: 1. Kühlstelle
- 142: 2. Kühlstelle
- 144: 3. Kühlstelle
- 146: 4. Kühlstelle
- 148: Kühlkörper
- 150: Fluidablenkblech
- 152: Fluid
- F: Fahrrad (E-Bike)
- A1-A6: Achsen
- R1-R4: erste schaltbare Radsätze (32)
- R5-R7: zweite schaltbare Radsätze (34)
- S1-S7: Schaltklinken (R1-R7)
- N1-N7: Schaltnocken (R1-R7)
- SM: Freilauf-Schaltklinke (40)
- NM: Schaltnocken (40)
- TF: Drehmoment Fahrer
- TM: Drehmoment elektrische Maschine
- TM-MIN: minimales Drehmoment der elektrischen Maschine
- TA: Ausgangsdrehmoment
- TF: Antriebsdrehmoment an 20
- P: Periode TF
- E1: erste Zeitspanne
- E2: zweite Zeitspanne

## Patentansprüche

1. Getriebeanordnung (16) für ein Fahrzeug (F), insbesondere für ein mit Muskelkraft antreibbares Fahrzeug wie ein Fahrrad (F), mit
- einer Eingangswelle (50),
- einer Vorgelegewelle (30),
- einer Ausgangswelle (36), die mit einem Antriebsrad (20) des Fahrzeugs (F) verbindbar ist,
- einer Mehrzahl von schaltbaren ersten Gangradsätzen (R1-R4), mittels denen die Eingangswelle (50) und die Vorgelegewelle (30) verbindbar sind und die jeweils wenigstens einer Gangstufe zugeordnet sind,
- einem Maschinenzahnrad (40), das mit einer der Wellen verbunden oder verbindbar ist und in das Antriebsmoment (T_{M}) einer elektrischen Maschine (22) einleitbar ist, wobei die elektrische Maschine (22) über eine Vorübersetzung (42) mit dem Maschinenzahnrad (40) verbunden ist,
**dadurch gekennzeichnet, dass**
die Vorübersetzung (42) axial überlappend mit wenigstens einem Gangradsatz der ersten Gangradsätze und/oder axial überlappend mit wenigstens einem Gangradsatz von zweiten schaltbaren Gangradsätzen angeordnet ist.

2. Getriebeanordnung nach Anspruch 1, wobei das Maschinenzahnrad (40) über einen Freilauf (SM) mit einer (30) der Wellen (50, 30, 36) verbunden ist.

3. Getriebeanordnung nach Anspruch 1, wobei das Maschinenzahnrad (40) fest mit der Vorgelegewelle (30) verbunden ist, wobei die elektrische Maschine (22) über eine Trennkupplung (92) oder einen Freilauf mit dem Maschinenzahnrad (40) verbindbar ist.

4. Getriebeanordnung nach Anspruch 1, wobei das Maschinenzahnrad (40) über einen Freilauf (SM) mit einer Zwischenwelle (96) verbunden ist, die fest mit einem an der Vorgelegewelle (30) drehbar gelagerten Losrad von einem Gangradsatz (R1) der ersten Gangradsätze (R1-R4) verbunden ist.

5. Getriebeanordnung nach Anspruch 1, wobei das Maschinenzahnrad (40) mit einer Zwischenwelle (100; 96^{IV}) verbunden oder verbindbar ist, die koaxial zu der Eingangswelle (50) angeordnet ist, wobei die Zwischenwelle (100; 96^{IV}) vorzugsweise über einen schaltbaren Freilauf (102) oder eine Trennkupplung mit der Eingangswelle (50) verbunden ist.

6. Getriebeanordnung nach einem der Ansprüche 1 - 5, **dadurch gekennzeichnet, dass** die Eingangswelle (50) über eine Federanordnung (52) einer Drehmomenterfassungseinrichtung (48) mit einer Antriebswelle (26) gekoppelt ist.

7. Getriebeanordnung nach einem der Ansprüche 1 - 6, wobei die elektrische Maschine (22) über eine Vorübersetzung (42) mit dem Maschinenzahnrad (40) verbunden ist, wobei die Vorübersetzung (42) ein Zwischenrad (109) aufweist, das drehbar an einer zu der Eingangswelle (50) und der Vorgelegewelle (30) parallel versetzt angeordneten Nebenwelle (108) gelagert ist.

8. Getriebeanordnung nach einem der Ansprüche 1 - 7, **dadurch gekennzeichnet, dass** die ersten Gangradsätze (R1-R4) ein erstes Teilgetriebe (32) bilden, wobei wenigstens ein zweiter schaltbarer Gangradsatz (R5-R7) die Vorgelegewelle (30) und die Ausgangswelle (36) verbindet und ein zweites Teilgetriebe (34) bildet, wobei der wenigstens eine zweite Gangradsatz (R5-R7) wenigstens einer Gangstufe zugeordnet ist, und wobei das Maschinenzahnrad (40) in axialer Richtung zwischen dem ersten Teilgetriebe (32) und dem zweiten Teilgetriebe (34) angeordnet ist.

9. Getriebeanordnung nach einem der Ansprüche 1 - 8, **dadurch gekennzeichnet, dass** die Radsätze (R1-R7) der Getriebeanordnung (16) in einem Gehäuse (14) angeordnet sind, das einen Fluidsumpf (132) zur Einrichtung einer Schmierung für die Radsätze (R1-R7) definiert, wobei in dem Gehäuse (14) eine Wärmequelle (86; 22S) angeordnet ist und wobei die Anordnung der Wärmequelle (86; 22S) in dem Gehäuse (14) so gewählt ist und/oder das Gehäuse (14) so ausgebildet ist, dass die Wärmequelle (86; 22S) von Fluid (152) angeströmt wird, das im Betrieb aus dem Fluidsumpf (132) entnommen, insbesondere hochgeschleudert wird.

10. Getriebeanordnung nach einem der Ansprüche 1 - 9, **dadurch gekennzeichnet, dass** die Radsätze (R1-R7) der Getriebeanordnung (16) in einem Gehäuse angeordnet sind, in dem ein Fluidsumpf (132) zur Schmierung und/oder Kühlung angeordnet ist, wobei eine Fluidpumpe (136) Fluid (152) aus dem Fluidsumpf (132) ansaugt, das zur Kühlung einer Wärmequelle (86; 22S) verwendet wird.

11. Antriebseinheit (10) für ein Fahrzeug (F), insbesondere für ein mit Muskelkraft antreibbares Fahrzeug wie ein Fahrrad, mit einer Getriebeanordnung (16) nach einem der Ansprüche 1 - 10 und mit einer elektrischen Maschine (22), die an das Maschinenzahnrad (40) der Getriebeanordnung (16) angeschlossen ist, wobei die Antriebseinheit vorzugsweise (i) eine Steuereinrichtung (88) zum Ansteuern einer Schaltvorrichtung (60) für die Gangradsätze (R1-R7) und/oder zum Ansteuern der elektrischen Maschine (22), und (ii) eine Sensoranordnung zum Erfassen wenigstens einer Zustandsgröße der Antriebseinheit (10) aufweist.

12. Antriebseinheit nach Anspruch 11, wobei die Sensoranordnung einen Rotorlagesensor (76) zur Erfassung einer Drehlage eines Rotors (22R) der elektrischen Maschine (22) und/oder einen Schaltlagesensor (72) und/oder einen Drehzahlsensor (56) zur Erfassung einer Drehzahl der Eingangswelle (50) und/oder einen Drehpositionssensor (54) zur Erfassung einer relativen Drehposition der Eingangswelle und/oder einen Kurbellagesensor (56) zur Erfassung einer Drehposition von mit einer Antriebswelle (26) verbundenen Kurbeln (18) und/oder einen Drehmomentsensor (54) zur Erfassung eines in eine Antriebswelle (26) eingeleiteten Muskelkraft-Drehmomentes (T_{F}) beinhaltet.

13. Antriebseinheit nach einem der Ansprüche 11 - 12, wobei die Steuereinrichtung (88) dazu ausgebildet und eingerichtet ist, einen Schaltvorgang von wenigstens einem der Radsätze (R1-R7) mittels der Schaltvorrichtung (60) während einer Zeitspanne (E2) durchzuführen, innerhalb der ein periodisch auf eine Antriebswelle (26) wirkendes Muskelkraft-Drehmoment (T_{F}) minimal ist.

14. Antriebseinheit nach einem der Ansprüche 11 - 13, wobei die Steuereinrichtung (88) dazu ausgebildet und eingerichtet ist, bei Erfassung eines Schaltwunsches zunächst ein von der elektrischen Maschine (22) bereitgestelltes Drehmoment (T_{M}) für eine erste kurze Zeitspanne (E1) zu erhöhen, um zumindest die Getriebeanordnung (16) zu verspannen, und anschließend das von der elektrischen Maschine (22) bereitgestellte Drehmoment (T_{M}) schnell zu verringern, um die Getriebeanordnung (16) für eine zweite kurze Zeitspanne (E2) in einen Zustand der Lastfreiheit zu versetzen, wobei die Schaltvorrichtung (60) zeitlich so angesteuert wird, dass ein Schalten eines Gangradsatzes (R1-R7) in diese zweite kurze Zeitspanne (E2) fällt,
wobei vorzugsweise vorgesehen ist, dass die Steuereinrichtung (88) dazu ausgebildet und eingerichtet ist, dass sich die erste kurze Zeitspanne (E1) zeitlich mit einer Zeitspanne überschneidet, bei der ein periodisch auf eine Antriebswelle (26) wirkendes Muskelkraft-Drehmoment (T_{F}) maximal ist und/oder wobei die Steuereinrichtung (88) dazu ausgebildet und eingerichtet ist, dass die zweite kurze Zeitspanne (E2) der Zeitspanne (E2) entspricht, innerhalb der das periodisch auf die Antriebswelle (26) wirkende Muskelkraft-Drehmoment (T_{F}) minimal ist, und/oder
wobei vorzugsweise vorgesehen ist, dass die elektrische Maschine (22) über eine Trennkupplung (92) oder einen schaltbaren Freilauf mit einer der Wellen verbindbar ist, wobei die Trennkupplung (92) oder der Freilauf bedarfsweise betätigt wird, so dass (a) eine schlagartige Deaktivierung eines von der elektrischen Maschine (22) bereitgestellten Drehmomentes (T_{M}) möglich ist, und/oder (b) eine Deaktivierung erfolgt, wenn eine Steuereinrichtung (88) kein Autorisierungssignal (91) erhält, und/oder (c) bei abgeschalteter elektrischer Maschine (22) kein Klickgeräusch zu hören ist.

15. Verfahren zum Betreiben einer Antriebseinheit nach einem der Ansprüche 11 - 14, wobei
- ein Schaltvorgang von wenigstens einem der Radsätze (R1-R7) mittels der Schaltvorrichtung (60) während einer Zeitspanne (E2) durchgeführt wird, bei der ein periodisch auf eine Antriebswelle (26) wirkendes Muskelkraft-Drehmoment (T_{F}) minimal ist; und/oder wobei
- bei Erfassung eines Schaltwunsches zunächst ein von der elektrischen Maschine (22) bereitgestelltes Drehmoment (T_{M}) für eine erste kurze Zeitspanne (E1) erhöht wird, um zumindest die Getriebeanordnung (16) zu verspannen, und anschließend das von der elektrischen Maschine (22) bereitgestellte Drehmoment (T_{F}) schnell verringert wird, um die Getriebeanordnung (14) für eine zweite kurze Zeitspanne (E2) in einen Zustand der Lastfreiheit zu versetzen, wobei die Schaltvorrichtung (60) zeitlich so angesteuert wird, dass ein Schalten eines Gangradsatzes (R1-R7) in diese zweite kurze Zeitspanne (E2) fällt.

## Claims

1. Gear arrangement (16) for a vehicle (F), in particular for a vehicle which can be driven using muscular force, such as a bicycle (F), having
- an input shaft (50),
- a layshaft (30),
- an output shaft (36) which can be connected to a drive wheel (20) of the vehicle (F),
- a plurality of shiftable first gear wheel sets (R1-R4) by means of which the input shaft (50) and the layshaft (30) can be connected, and which are each associated with at least one gear stage,
- a machine gear (40) which is connected or can be connected to one of the shafts and into which the drive torque (T_{M}) of an electric machine (22) can be introduced, wherein the electric machine (22) is connected to the machine gear (40) by means of a lead gear mechanism (42),
**characterised in that**
wherein the lead gear mechanism (42) is arranged so as to axially overlap with at least one gear wheel set of the first gear wheel sets and/or is arranged so as to axially overlap with at least one gear wheel set of the second shiftable gear wheel sets.

2. Gear arrangement according to claim 1, wherein the machine gear (40) is connected by means of a free wheel (SM) to one (30) of the shafts (50, 30, 36).

3. Gear arrangement according to claim 1, wherein the machine gear (40) is securely connected to the layshaft (30), wherein the electric machine (22) can be connected to the machine gear (40) by means of a separating clutch (92) or a free wheel.

4. Gear arrangement according to claim 1, wherein the machine gear (40) is connected by means of a free wheel (SM) to an intermediate shaft (96) which is securely connected to an idler wheel of a gear wheel set (R1) of the first gear wheel sets (R1-R4), which idler wheel is rotatably supported on the layshaft (30).

5. Gear arrangement according to claim 1, wherein the machine gear (40) is connected or can be connected to an intermediate shaft (100; 96^{IV}) which is arranged coaxially with respect to the input shaft (50), wherein the intermediate shaft (100; 96^{IV}) preferably is connected to the input shaft (50) by means of a shiftable free wheel (102) or a separating clutch.

6. Gear arrangement according to any one of claims 1 to 5, **characterised in that** the input shaft (50) is coupled to a drive shaft (26) by means of a spring arrangement (52) of a torque detection device (48).

7. Gear arrangement according to any one of claims 1 to 6, wherein the electric machine (22) is connected to the machine gear (40) by means of a lead gear mechanism (42), wherein the lead gear mechanism (42) has an intermediate wheel (109) which is rotatably supported on an auxiliary shaft (108) which is arranged offset in a parallel manner with respect to the input shaft (50) and the layshaft (30).

8. Gear arrangement according to any one of claims 1 to 7, wherein the first gear wheel sets (R1-R4) form a first part-gear mechanism (32), wherein at least one second shiftable gear wheel set (R5-R7) connects the layshaft (30) and the output shaft (36) and forms a second part-gear mechanism (34), wherein the at least one second gear wheel set (R5-R7) is associated with at least one gear stage and wherein the machine gear (40) is arranged in an axial direction between the first part-gear mechanism (32) and the second part-gear mechanism (34).

9. Gear arrangement according to any one of claims 1 to 8, **characterised in that** the wheel sets (R1 to R7) of the gear arrangement (16) are arranged in a housing (14) which defines a fluid sump (132) for producing a lubrication for the wheel sets (R1 to R7), wherein a heat source (86; 22S) is arranged in the housing (14) and wherein the arrangement of the heat source (86; 22S) in the housing (14) is selected in such a manner and/or the housing (14) is constructed in such a manner that the heat source (86; 22S) is subjected to the flow of fluid (152) which is removed, in particular thrown up, from the fluid sump (132) during operation.

10. Gear arrangement according to any one of claims 1 to 9, **characterised in that** the wheel sets (R1 - R7) of the gear arrangement (16) are arranged in a housing in which a fluid sump (132) is arranged for lubrication and/or cooling, wherein a fluid pump (136) draws from the fluid sump (132) fluid (152) which is used to cool the heat source (86; 22S).

11. Drive unit (10) for a vehicle (F), in particular for a vehicle which is driven with muscular force, such as a bicycle, having a gear arrangement (16) according to any one of claims 1 to 10 and having an electric machine (22) which is connected to the machine gear (40) of the gear arrangement (16), wherein the drive unit preferably comprises (i) a control device (88) for controlling a shifting apparatus (60) for the gear wheel sets (R1-R7) and/or for controlling the electric machine (22), and (ii) a sensor arrangement for detecting at least one status variable of the drive unit (10).

12. Drive unit according to claim 11, wherein the sensor arrangement comprises a rotor position sensor (76) for detecting a rotation position of a rotor (22R) of the electric machine (22) and/or a shifting position sensor (72) and/or a speed sensor (56) for detecting a speed of the input shaft (50) and/or a rotation position sensor (54) for detecting a relative rotation position of the input shaft and/or a crank position sensor (56) for detecting a rotation position of cranks (18) which are connected to a drive shaft (26) and/or a torque sensor (54) for detecting a muscular force torque (T_{F}) which is introduced into a drive shaft (26).

13. Drive unit according to any one of claims 11 to 12, wherein the control device (88) is constructed and configured to carry out a shifting operation of at least one of the wheel sets (R1-R7) by means of the shifting apparatus (60) during a time period (E2), within which a muscular force torque (T_{F}) acting periodically on a drive shaft (26) is at a minimum.

14. Drive unit according to any one of claims 11 to 13, wherein the control device (88) is constructed and configured, when a wish to shift is detected, to initially increase a torque (T_{M}) provided by the electric machine (22) for a first short time period (E1) in order to tension at least the gear arrangement (16), and subsequently to rapidly decrease the torque (T_{M}) provided by the electric machine (22) in order to place the gear arrangement (16) for a second short time period (E2) in a load-free state, wherein the shifting apparatus (60) is temporally controlled in such a manner that a shifting of a gear wheel set (R1-R7) falls within this second short time period (E2),
wherein it is preferably provided that the control device (88) is constructed and configured so that the first short time period (E1) overlaps temporally with a time period in which a muscular force torque (T_{F}) acting periodically on a drive shaft (26) is at a maximum, and/or wherein the control device (88) is constructed and configured so that the second short time period (E2) corresponds to the time period (E2) within which the muscular force torque (T_{F}) acting periodically on the drive shaft (26) is at a minimum, and/or
wherein it is preferably provided that the electric machine (22) can be connected to one of the shafts by means of a separating clutch (92) or a shiftable free wheel, wherein the separating clutch (92) or the free wheel is activated where required so that (a) a sudden deactivation of a torque (T_{M}) provided by the electric machine (22) is possible and/or (b) a deactivation is carried out when a control device (88) does not obtain any authorisation signal (91) and/or (c) no clicking noise can be heard when the electric machine (22) is shifted off.

15. Method for operating a drive unit according to any one of claims 11 to 14, wherein
- a shifting operation of at least one of the wheel sets (R1-R7) is carried out by means of the shifting apparatus (60) during a time period (E2) in which a muscular force torque (TF) which acts periodically on a drive shaft (26) is at a minimum; and/or wherein,
- when a wish to shift is detected, a torque (TM) provided by the electric machine (22) is initially increased for a first short time period (E1) in order to tension at least the gear arrangement (16), and, subsequently, the torque (TF) provided by the electric machine (22) is rapidly reduced in order to move the gear arrangement (14) for a second short time period (E2) into a load-free state, wherein the shifting apparatus (60) is temporally controlled in such a manner that a shifting of a gear wheel set (R1-R7) falls within this second short time period (E2).

## Revendications

1. Système de transmission (16) pour un véhicule (F), en particulier pour un véhicule pouvant être entraîné par force musculaire tel qu'une bicyclette (F), comportant
- un arbre d'entrée (50),
- un arbre de renvoi (30),
- un arbre de sortie (36) qui peut être relié à un pignon moteur (20) du véhicule (F),
- une pluralité de premiers jeux de pignons de rapports (R1-R4) commutables, au moyen desquels l'arbre d'entrée (50) et l'arbre de renvoi (30) peuvent être reliés, et qui sont respectivement associés à au moins un rapport de vitesse,
- un pignon denté de machine (40) qui est relié ou peut être relié à l'un des arbres et qui peut être introduit dans le couple d'entraînement (T_{M}) d'une machine électrique (22),
dans lequel la machine électrique (22) est reliée au pignon denté de machine (40) par l'intermédiaire d'un engrenage amont (42),
**caractérisé en ce que**
l'engrenage amont (42) est disposé de manière à chevaucher axialement au moins un jeu de pignons de rapports des premiers jeux de pignons de rapports et/ou de manière à chevaucher axialement au moins un jeu de pignons de rapports de seconds jeux de pignons de rapports commutables.

2. Système de transmission selon la revendication 1, dans lequel le pignon denté de machine (40) est relié à l'un (30) des arbres (50, 30, 36) par l'intermédiaire d'une roue libre (SM).

3. Système de transmission selon la revendication 1, dans lequel le pignon denté de machine (40) est relié fixement à l'arbre de renvoi (30), dans lequel la machine électrique (22) peut être reliée au pignon denté de machine (40) par l'intermédiaire d'un embrayage de séparation (92) ou d'une roue libre.

4. Système de transmission selon la revendication 1, dans lequel le pignon denté de machine (40) est relié à un arbre intermédiaire (96) par l'intermédiaire d'une roue libre (SM), lequel arbre intermédiaire est relié fixement à un pignon fou d'un jeu de pignons de rapports (R1) des premiers jeux de pignons de rapports (R1-R4) qui est monté rotatif sur l'arbre de renvoi (30).

5. Système de transmission selon la revendication 1, dans lequel le pignon denté de machine (40) est relié ou peut être relié à un arbre intermédiaire (100 ; 96^{IV}) qui est disposé de manière coaxiale par rapport à l'arbre d'entrée (50), dans lequel l'arbre intermédiaire (100 ; 96^{IV}) est relié à l'arbre d'entrée (50) de préférence par l'intermédiaire d'une roue libre commutable (102) ou d'un embrayage de séparation.

6. Système de transmission selon l'une des revendications 1 à 5, **caractérisé en ce que** l'arbre d'entrée (50) est accouplé à un arbre d'entraînement (26) par l'intermédiaire d'un système à ressort (52) d'un appareil de détection de couple de rotation (48).

7. Système de transmission selon l'une des revendications 1 à 6, dans lequel la machine électrique (22) est reliée au pignon denté de machine (40) par l'intermédiaire d'un engrenage amont (42), dans lequel l'engrenage amont (42) présente un pignon intermédiaire (109) qui est monté rotatif sur un arbre secondaire (108) disposé de manière à être décalé parallèlement à l'arbre d'entrée (50) et à l'arbre de renvoi (30).

8. Système de transmission selon l'une des revendications 1 à 7, **caractérisé en ce que** les premiers jeux de pignons de rapports (R1-R4) forment une première transmission partielle (32), dans lequel au moins un second jeu de pignons de rapports (R5-R7) commutable relie l'arbre de renvoi (30) à l'arbre de sortie (36) et forme une seconde transmission partielle (34), dans lequel l'au moins un second jeu de pignons de rapports (R5-R7) est associé à au moins un rapport de vitesse, et dans lequel le pignon denté de machine (40) est disposé dans la direction axiale entre la première transmission partielle (32) et la seconde transmission partielle (34).

9. Système de transmission selon l'une des revendications 1 à 8, **caractérisé en ce que** les jeux de pignons (R1-R7) du système de transmission (16) sont disposés dans un boîtier (14) qui définit un bassin de fluide (132) permettant d'établir une lubrification pour les jeux de pignons (R1-R7), dans lequel une source de chaleur (86 ; 22S) est disposée dans le boîtier (14) et dans lequel la disposition de la source de chaleur (86 ; 22S) dans le boîtier (14) est choisie et/ou le boîtier (14) est réalisé de sorte que la source de chaleur (86 ; 22S) est alimentée en fluide (152), lequel est prélevé, en particulier propulsé, depuis le bassin de fluide (132) lors du fonctionnement.

10. Système de transmission selon l'une des revendications 1 à 9, **caractérisé en ce que** les jeux de pignons (R1-R7) du système de transmission (16) sont disposés dans un boîtier dans lequel est disposé un bassin de fluide (132) permettant la lubrification et/ou le refroidissement, dans lequel une pompe à fluide (136) aspire du fluide (152) depuis le bassin de fluide (132), lequel fluide est utilisé pour le refroidissement d'une source de chaleur (86 ; 22S).

11. Unité d'entraînement (10) pour un véhicule (F), en particulier pour un véhicule pouvant être entraîné par force musculaire tel qu'une bicyclette, comportant un système de transmission (16) selon l'une des revendications 1 à 10 et comportant une machine électrique (22) qui est raccordée au pignon denté de machine (40) du système de transmission (16), dans laquelle l'unité d'entraînement présente de préférence (i) un appareil de commande (88) permettant de commander un dispositif de commutation (60) pour les jeux de pignons de rapports (R1-R7) et/ou permettant de commander la machine électrique (22) et (ii) un système de capteurs permettant de détecter au moins une grandeur d'état de l'unité d'entraînement (10).

12. Unité d'entraînement selon la revendication 11, dans laquelle le système de capteurs contient un capteur de position de rotor (76) permettant de détecter une position de rotation d'un rotor (22R) de la machine électrique (22) et/ou un capteur de position de commutation (72) et/ou un capteur de vitesse de rotation (56) permettant de détecter une vitesse de rotation de l'arbre d'entrée (50) et/ou un capteur de position de rotation (54) permettant de détecter une position de rotation relative de l'arbre d'entrée et/ou un capteur de position de manivelles (56) permettant de détecter une position de rotation de manivelles (18) reliées à un arbre d'entraînement (26) et/ou un capteur de couple de rotation (54) permettant de détecter un couple de rotation de force musculaire (T_{F}) introduit dans un arbre d'entraînement (26).

13. Unité d'entraînement selon l'une des revendications 11 à 12, dans laquelle l'appareil de commande (88) est réalisé et configuré pour mettre en oeuvre une opération de commutation d'au moins l'un des jeux de pignons (R1-R7) au moyen du dispositif de commutation (60) pendant une période (E2) au cours de laquelle un couple de rotation de force musculaire (T_{F}) agissant périodiquement sur un arbre d'entraînement (26) est minimal.

14. Unité d'entraînement selon l'une des revendications 11 à 13, dans laquelle l'appareil de commande (88) est réalisé et configuré pour, en cas de détection d'une demande de commutation, d'abord augmenter pendant une première courte période (E1) un couple de rotation (T_{M}) fourni par la machine électrique (22) afin de contraindre au moins le système de transmission (16), et ensuite diminuer rapidement le couple de rotation (T_{M}) fourni par la machine électrique (22) afin de mettre le système de transmission (16) dans un état de non-charge pendant une seconde courte période (E2), dans laquelle le dispositif de commutation (60) est commandé dans le temps de sorte qu'une commutation d'un jeu de pignons de rapports (R1-R7) arrive pendant ladite seconde courte période (E2),
dans laquelle il est de préférence prévu que l'appareil de commande (88) soit réalisé et configuré pour que la première courte période (E1) coïncide dans le temps avec une période pendant laquelle un couple de rotation de force musculaire (T_{F}) agissant périodiquement sur un arbre d'entraînement (26) est maximal et/ou dans laquelle l'appareil de commande (88) est réalisé et configuré pour que la seconde courte période (E2) corresponde à la période (E2) au cours de laquelle le couple de rotation de force musculaire (T_{F}) agissant périodiquement sur l'arbre d'entraînement (26) est minimal, et/ou
dans laquelle il est de préférence prévu que la machine électrique (22) puisse être reliée à l'un des arbres par l'intermédiaire d'un embrayage de séparation (92) ou d'une roue libre commutable, dans laquelle la roue libre ou l'embrayage de séparation (92) est actionné en cas de besoin, de sorte que (a) une désactivation soudaine d'un couple de rotation (T_{M}) fourni par la machine électrique (22) est possible et/ou (b) une désactivation est effectuée lorsqu'un appareil de commande (88) ne reçoit aucun signal d'autorisation (91), et/ou (c) aucun bruit de cliquetis n'est entendu lorsque la machine électrique (22) est mise hors tension.

15. Procédé permettant de faire fonctionner une unité d'entraînement selon l'une des revendications 11 à 14, dans lequel
- une opération de commutation d'au moins l'un des jeux de pignons (R1-R7) est mise en oeuvre au moyen du dispositif de commutation (60) pendant une période (E2) pendant laquelle un couple de rotation de force musculaire (T_{F}) agissant périodiquement sur un arbre d'entraînement (26) est minimal ; et/ou dans lequel
- en cas de détection d'une demande de commutation, un couple de rotation (T_{M}) fourni par la machine électrique (22) est d'abord augmenté pendant une première courte période (E1) afin de contraindre au moins le système de transmission (16), et ensuite le couple de rotation (T_{F}) fourni par la machine électrique (22) est rapidement diminué afin de mettre le système de transmission (14) dans un état de non-charge pendant une seconde courte période (E2), dans lequel le dispositif de commutation (60) est commandé dans le temps de sorte qu'une commutation d'un jeu de pignons de rapports (R1-R7) arrive pendant ladite seconde courte période (E2).
